Europäisches Patentamt

European Patent Office

Office européen des brevets

(11) Veröffentlichungsnummer : **0 348 407 B1**

# (12) EUROPÄISCHE PATENTSCHRIFT

(45) Veröffentlichungstag der Patentschrift :
**08.07.92 Patentblatt 92/28**

(21) Anmeldenummer : **88901786.9**

(22) Anmeldetag : **22.02.88**

(86) Internationale Anmeldenummer :
**PCT/DE88/00089**

(87) Internationale Veröffentlichungsnummer :
**WO 88/06749 07.09.88 Gazette 88/20**

(51) Int. Cl.⁵ : **G03B 42/04**

(54) **AUTOMATISCHE FILMEINLEGEVORRICHTUNG FÜR BLATTFILM-KASSETTEN.**

(30) Priorität : **24.02.87 DE 3705851**

(43) Veröffentlichungstag der Anmeldung :
**03.01.90 Patentblatt 90/01**

(45) Bekanntmachung des Hinweises auf die
Patenterteilung :
**08.07.92 Patentblatt 92/28**

(84) Benannte Vertragsstaaten :
**AT CH DE FR GB LI**

(56) Entgegenhaltungen :
**EP-A- 0 052 159**
**EP-A- 0 123 053**
**DE-A- 3 000 760**
**DE-A- 3 306 720**

(73) Patentinhaber : **EASTMAN KODAK COMPANY**
**(a New Jersey corporation)**
**343 State Street**
**Rochester New York 14650 (US)**
㊷ **CH FR GB LI AT**

Patentinhaber : **KODAK**
**AKTIENGESELLSCHAFT**
**Hedelfingerstrasse P.O. Box 600345**
**W-7000 Stuttgart 60 (DE)**
㊷ **DE**

(72) Erfinder : **BAUMANN, Kurt**
**Schlehenweg 7**
**W-7302 Ostfildern 1 (DE)**
Erfinder : **MIRLIEB, Bernd**
**Lutherstrasse 16**
**W-7012 Fellbach (DE)**
Erfinder : **SCHEUFLER, Gert**
**Forststrasse 22**
**W-7057 Winnenden (DE)**
Erfinder : **TRUMPP, Alfred**
**Tiroler Strasse 74**
**W-7000 Stuttgart 61 (DE)**

(74) Vertreter : **Lewandowsky, Klaus et al**
**Kodak Aktiengesellschaft Postfach 600345**
**Hedelfinger Strasse**
**W-7000 Stuttgart 60 (DE)**

**Beschreibung**

Die Erfindung bezieht sich auf eine Vorrichtung zum automatischen Einlegen eines Blattfilms in eine Blattfilm-Kassette, mit mehreren Blattfilm-Vorratsmagazinen und mit einer zwischen einem angewählten Vorratsmagazin und einer Kassetten-Ladestation bewegbaren Blattfilm-Übergabevorrichtung.

Bei einer durch die EP-A 0052159 bekannt gewordenen Vorrichtung dieser Art ist eine vertikal und horizontal bewegbare Saugleiste vorgesehen, die vertikal auf die Höhe des angewählten Vorratsmagazins fahrbar ist und durch eine horizontale Bewegung einen Film aus einem Vorratsmagazin entnimmt und einer Filmkassette zuführt. Diese bekannte Vorrichtung erfordert einen sehr großen Raumbedarf, da die Blattüberführungsmittel in Verlängerung der Filmvorratsmagazine gesehen neben diesen angeordnet sind und außerdem der bei dieser bekannten Vorrichtung erforderliche Schiebeweg zum Öffnen der Filmvorratsmagazine den Raumbedarf zusätzlich vergrößert.

Bei einer anderen bekannten Vorrichtung (DE-OS 33 06 720) sind jedem Vorratsmagazin separate Filmentnahme- und Filmtransportmittel zugeordnet, die einen entnommenen Film einer zur Kassetten-Ladestation führenden Rollentransportbahn übergeben. Diese Ausführung erfordert ebenfalls einen großen Raumbedarf, da für die Zuordnung der Filmentnahme- und Filmtransportmittel zu jedem der Vorratsmagazine ein entsprechend großer Zwischenraum sowohl zwischen den Vorratsmagazinen untereinander als auch zwischen den Vorratsmagazinen und der Rollentransportbahn erforderlich ist. Darüber hinaus ist diese bekannte Vorrichtung durch die Vielzahl von Filmentnahme- und Transportmitteln sehr aufwendig.

Es ist die Aufgabe der Erfindung, eine Vorrichtung der gattungsgemäßen Art dahingehend auszugestalten, daß neben einer schonenden und zuverlässigen Filmhandhabung eine kompakte, wenig Raumbedarf erfordernde Geräteform erreicht wird.

Erfindungsgemäß wird dies dadurch erreicht, daß die Blattfilm-übergabevorrichtung einen Blattfilmhalter mit einer Führungsbahn zur Aufnahme eines Blattfilmes aufweist, daß der Blattfilmhalter eine auf der Führungsbahn bewegbare Blattgreifvorrichtung aufweist und daß der Blattfilmhalter und die Blattgreifvorrichtung als eine gemeinsam bewegbare Einheit ausgebildet sind.

In vorteilhafter Ausgestaltung der Erfindung ist die Führungsbahn des Blattfilmhalters bogenförmig, vorzugsweise kreisbogenförmig ausgebildet und die Blattgreifvorrichtung ist um das Zentrum des kreisbogenförmigen Blattfilmhalters und konzentrisch zu dessen Führungsbahn schwenkbar gelagert.

In weiterer vorteilhafter Ausgestaltung der Erfindung weist die Vorrichtung folgende Merkmale auf:
 – Der Blattfilmhalter besteht aus zwei gleichartig geformten,  in einem Abstand und parallel zueinander angeordneten Draht teilen mit kreisbogenförmigen und parallelen Führungskanälen;
 – Die Blattgreifvorrichtung ist als Saugvorrichtung ausgebildet und zusammen mit einer Drahtbügel-Baugruppe innerhalb des  Blattfilmhalters angeordnet;
 – Die Drahtbügel-Baugruppe ist achsgleich mit der Saugvorrich tung schwenkbar gelagert und über eine Kupplung mit dieser  verbunden;
 – An der Drahtbügel-Baugruppe ist eine einen vereinzelten Blatt film umgreifende Gabellichtschranke zur Doppelblatterkennung  angeordnet;
 – An der Saugvorrichtung ist eine schwenkbare Saugleiste mit  Sensoren zur Saugleistensteuerung und Blattfilm-Vorratsan zeige vorgesehen;
 – Die Saugleiste ist kippbar ausgebildet;
 – Die Saugleiste weist ein Strangpreßteil mit Längsbohrungen als Luftleitkanal für Sauger und zur Befestigung von Bau teilen auf;
 – Die Drahtbügel-Baugruppe weist Blattfilm-Auflageteile zum  kontrollierten Auffangen und Rückführung eines abfallenden  Blattfilm-Doppels auf;
 – Die Führungsbahn des Blattfilmhalters ist als Führungskanal  ausgebildet;
 – Die Blattfilm-Übergabevorrichtung ist vertikal und entlang  der Stirnseiten von übereinanderliegend angeordneten Vor ratsmagazinen und einer darüber angeordneten Einzel-Blatt filmkassette geradlinig bewegbar geführt.

In vorteilhafter Weiterbildung der Erfindung weist die Vorrichtung folgende Merkmale auf:
 – Der Blattfilmhalter weist eine bereichsweise gerade und eine  daran anschließende, kreisbogenförmige Führungsbahn auf;
 – Die Saugvorrichtung ist an einem endlosen Riemen sowohl parallel zur geraden Führungsbahn als auch parallel zur kreisbogenförmigen Führungsbahn geführt;
 – Der Blattfilmhalter weist eine schalenförmige Führungsbahn auf;
 – Die Blattfilm-übergabevorrichtung ist horizontal und entlang  der Stirnseiten von nebeneinander stehend angeordneten Vorrats magazinen und einer daneben angeordneten Einzelblattfilmkasset te geradlinig bewegbar geführt.

Mit der erfindungsgemäßen Vorrichtung wird in besonders vorteilhafter Weise erreicht, daß Blattfilme unterschiedlichen Formats einer Vorratskassette entnommen werden können und mittels einer raumsparenden Blattfilm-Übergabevorrichtung schonend und zuverlässig in eine Kassetten-Ladestation übergeben werden können.

Durch die besondere Ausbildung und Zuordnung der Blattfilm-Übergabevorrichtung zu den Vorratsmagazinen wird in vorteilhafter Weise erreicht, daß unterhalb des untersten Vorratsmagazins ein freier Raum zur Unterbringung einer Steuerungselektronik entsteht. Dadurch gelangen die Vorratsmagazine und die Ladestation in eine angehobene, bedienungsfreundliche Arbeitshöhe.

Weitere Merkmale und Vorteile sind der Beschreibung von in der Zeichnung dargestellten Ausführungsbeispielen der Erfindung und den Unteransprüchen zu entnehmen. Die Zeichnung zeigt jeweils in schematischer Darstellung in der

Fig. 1 die Vorrichtung in einer Seitenansicht im Schnitt;

Fig. 2 eine Teilansicht der Vorrichtung gemäß Fig. 1 in der Blattfilm-Vereinzelungsstellung;

Fig. 3 eine Teilansicht der Vorrichtung gemäß Fig. 1 in der Blattfilm-Übergabestellung;

Fig. 4 die Vorrichtung gemäß Fig. 2 in Pfeilrichtung "A" gesehen;

Fig. 5 eine Teilansicht der Vorrichtung gemäß Fig. 4 von unten gesehen;

Fig. 6 ein vergrößerter Ausschnitt der Vorrichtung gemäß Fig. 2 im Schnitt;

Fig. 7 ein vergrößerter Ausschnitt der Vorrichtung gemäß Fig. 2 in der Stellung "Vorratsmagazin fast leer" im Schnitt;

Fig. 8 eine Teildarstellung der Vorrichtung gemäß Fig. 1 in einer Schrägansicht;

Fig. 9 eine Federkupplung gemäß Fig. 4 in einer auseinandergezogenen Darstellung;

Fig. 10 ein weiteres Ausführungsbeispiel in einer Seitenansicht im Schnitt;

Fig. 11 ein weiteres Ausführungsbeispiel in einer Seitenansicht im Schnitt;

Fig. 12 ein weiteres Ausführungsbeispiel in einer Seitenansicht im Schnitt und

Fig. 13 ein weiteres Ausführungsbeispiel in einer Seitenansicht im Schnitt.

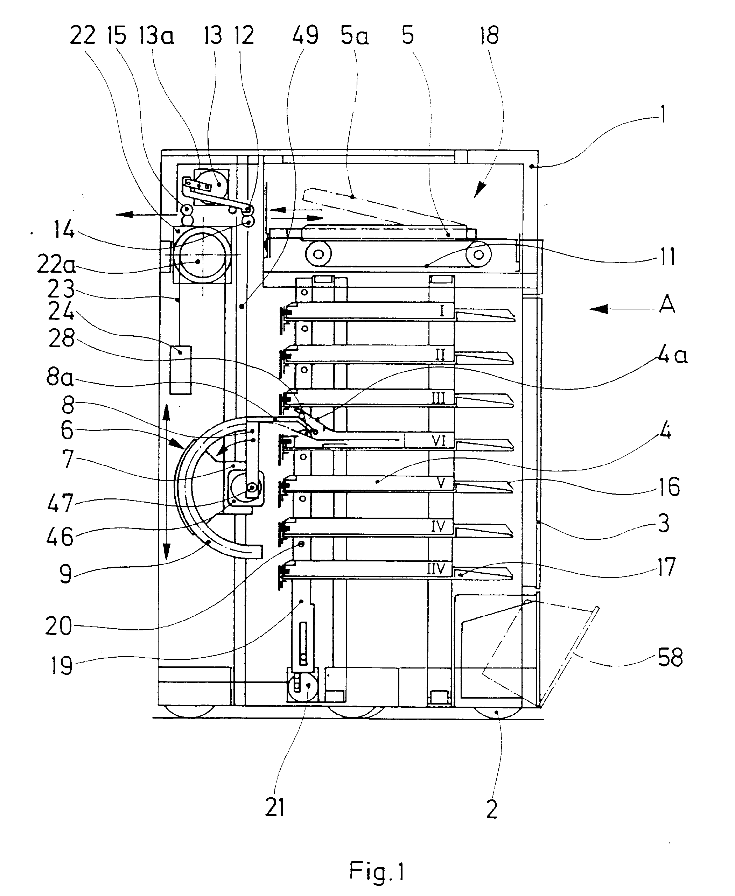

Die Fig. 1 zeigt eine Vorrichtung zum Beladen und Entladen von Kassetten 5 für Röntgenblattfilm.

In einem auf Rollen 2 bewegbaren, insgesamt lichtdichten Gehäuse 1 sind sieben Vorratsmagazine 4 (I bis VII) an paarweise angeordneten Leisten 16 übereinander und in gleichen Abständen zueinander angeordnet.

In einem Vorratsmagazin 4 sind eine Anzahl von Blattfilmen gleichen Formats gestapelt. In den sieben Vorratsmagazinen 4 befinden sich unterschiedliche Blattfilm-Formate. In Abhängigkeit von der Verarbeitungshäufigkeit können auch mehrere der Vorratsmagazine 4 mit dem gleichen Blattfilm-Format bestückt sein.

Die Blattfilme sind innerhalb der Vorratsmagazine 4 durch nicht dargestellte Mittel zur Entnahmeseite hin und mittenorientiert ausgerichtet.

Die Vorratsmagazine 4 sind durch eine Tür 3 an der Vorderseite des Gerätes zugänglich und werden beim Einschieben bis zu einem nicht näher dargestellten stirnseitigen Anschlag bewegt und in der erreichten Lage durch eine rückwärtige Raststufe 17 fixiert.

Die Vorratsmagazine 4 weisen einen der Entnahmeseite zugeordneten, schwenkbar angelenkten und durch Eigengewicht schließenden Deckel 4a auf. Jeder der Deckel 4a ist mit einem seitlich vorstehenden, nicht dargestellten Vorsprung versehen, der in den Bewegungsweg einer Deckelöffnungsvorrichtung 19, 20 ragt.

In der eingeschobenen Stellung wird durch nicht dargestellte Mittel bekannter Art eine vorratsmagazinseitige Deckelverriegelung entriegelt.

Die Deckel-Öffnungsvorrichtung besteht aus einem vertikal bewegbaren Schieber 19, der sich über sämtliche Vorratsmagazine 4 erstreckt und aus daran angeordneten, elektromagnetisch betätigbaren Stößeln 20. In den Bewegungsweg der Stößel 20 ragen die seitlich vorstehenden, nicht dargestellten Vorsprünge der Deckel 4a.

Jedem Deckel 4a ist ein wahlweise ausfahrbarer Stößel 20 zugeordnet, wobei jeweils derjenige Stößel 20 elektromagnetisch ausgefahren wird, der dem zur Blattfilmentnahme angewählten Vorratsmagazin 4 benachbart ist.

Der Schieber 19 wird über eine elektromotorisch angetriebene Exzenterscheibe 21 vertikal bewegt.

Oberhalb der Vorratsmagazine 4 ist eine lichtdichte Kassetten-Ent- und Beladestation 18 angeordnet, in der eine Kassette 5 auf einem Transportband 11 ein- und ausfahrbar angeordnet ist.

In der Ent- und Beladestation 18 sind nicht dargestellte, den Kassetten-deckel 5a betätigende Öffnungsmittel bekannter Art angeordnet.

Neben der Ent- und Beladestation 18 ist ein von einem Kurbelgetriebe 13, 13a bewegbarer Saugarm 12 angeordnet, der zur Entnahme eines Blattfilms aus der Kassette 5 und zur übergabe des entnommenen Blattfilms an Transportrollen 14 dient.

Die Transportrollen 14 und diesen nachgeschaltete Transportrollen 15 dienen zur Ausgabe eines belichteten Blattfilmes aus der Ent- und Beladestation 18 in ein lichtdicht nachgeschaltetes, nicht dargestelltes Filmentwicklungsgerät bekannter Art.

Unterhalb der Vorratsmagazine 4 ist eine nicht dargestellte Steuerungsvorrichtung für das Gerät vorgesehen, sowie eine dieser zugeordnete, herausschwenkbare,Kundendienstzwecken dienende Kontrollvorrichtung 58 angeordnet.

Den Stirnseiten der Vorratsmagazine 4 ist eine Blattübergabevorrichtung 6 zugeordnet, die zwischen den Entnahmestationen I bis VII der Vorratsmagazine 4 und der Ent- und Beladestation 18 vertikal verfahrbar ist.

Die Blattübergabevorrichtung 6 weist ein Führungsteil 7 auf, mittels dem diese an einer vertikal angeordneten Führungssäule 49 verschiebbar und verdrehsicher geführt ist.

An dem Führungsteil 7 ist eine Antriebskette 23 befestigt (siehe Fig. 1), in die ein von einem Schrittmotor 22 angetriebenes Kettenrad 22a eingreift und an deren freiem Ende ein Gegengewicht 24 befestigt ist.

Die Blattübergabevorrichtung 6 weist im wesentlichen folgende Baugruppen auf:

– Führungsteil 7 mit Elektromotor 46 und Motorachse 47
– Saugleistenarm 8 mit Saugleiste 28
– Blattfilmhalter 9, 10, 39, 40
– Drahtbügel-Baugruppe 34
– Federkupplung 34 bis 38.

Alle Baugruppen der Blattfilmübergabevorrichtung 6 sind zu einer gemeinsamen vertikal bewegbaren Einheit zusammengefaßt, die im folgenden näher erläutert wird:

An dem Führungsteil 7 sind ein Elektromotor 46 mit einer Motorachse 47 und eine Halteschiene 40 befestigt.

Auf der Motorachse 47 des Elektromotors 46 sind ein Saugarm 8 mit einer Saugleiste 28, eine Drahtbügel-Baugruppe 34 und eine Federkupplung 34 bis 38 angeordnet.

An der Halteschiene 40 sind ein Blattfilmhalter 9, 10, ein Anschlag 39 und eine Reflexlichtschranke 44 befestigt.

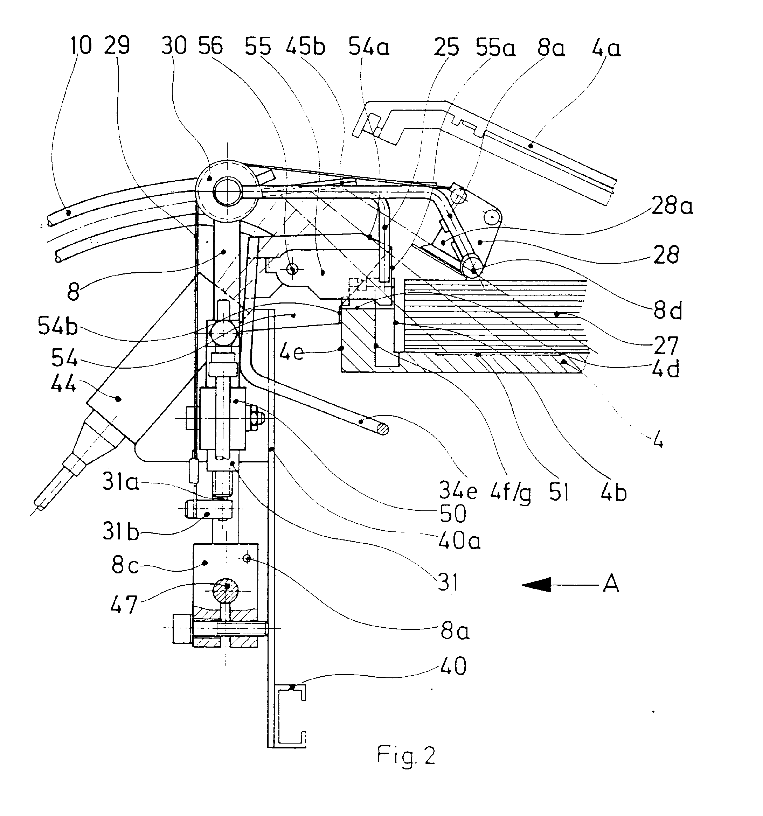

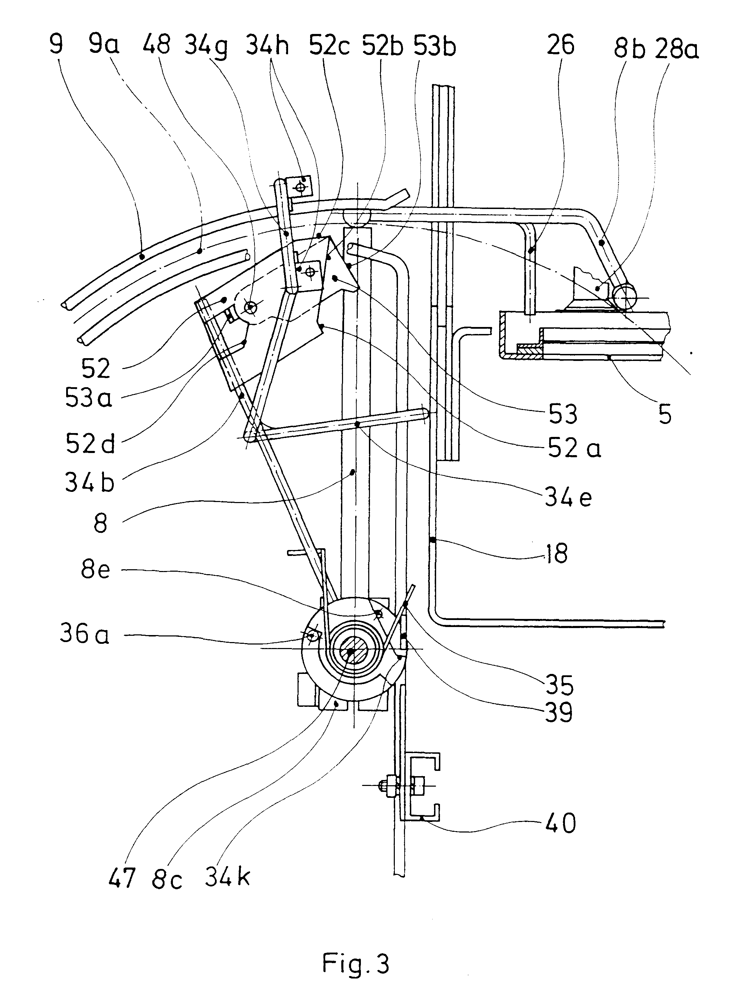

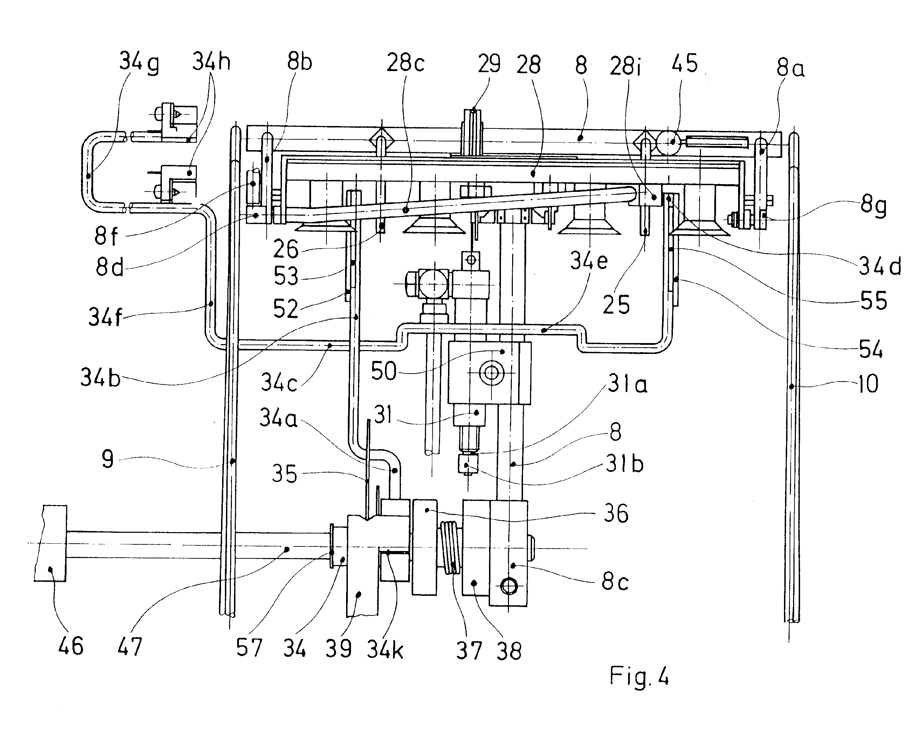

Der Saugleistenarm 8 ist - wie aus der Fig. 4 ersichtlich - T-förmig ausgebildet und mittels eines Befestigunsteils 8c auf der Motorachse 47 befestigt. An seinem Quersteg weist der Saugleistenarm 8 Arme 8a und 8b auf, die - wie aus den Fig. 2 und 3 zu entnehmen ist - an ihren Enden nach unten abgewinkelt sind.

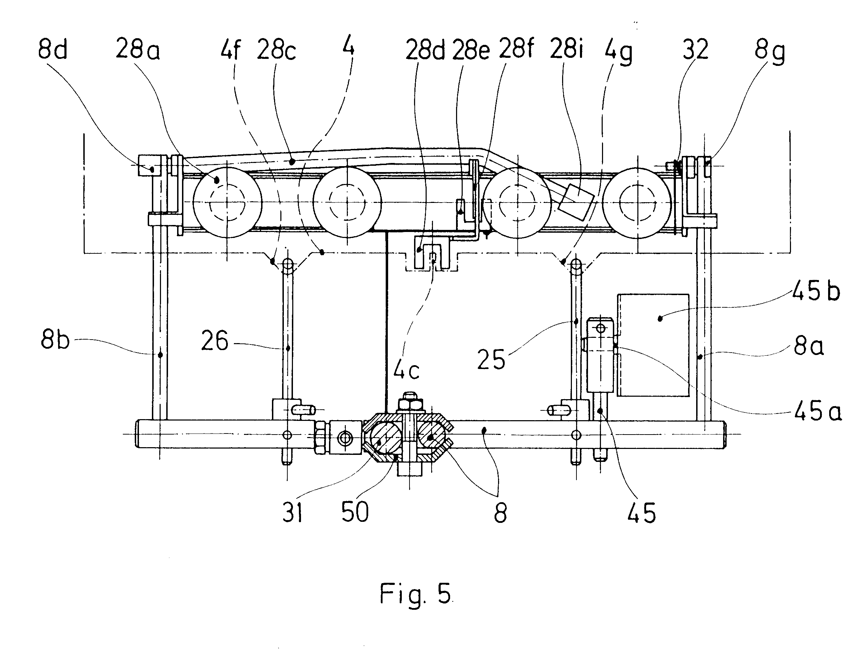

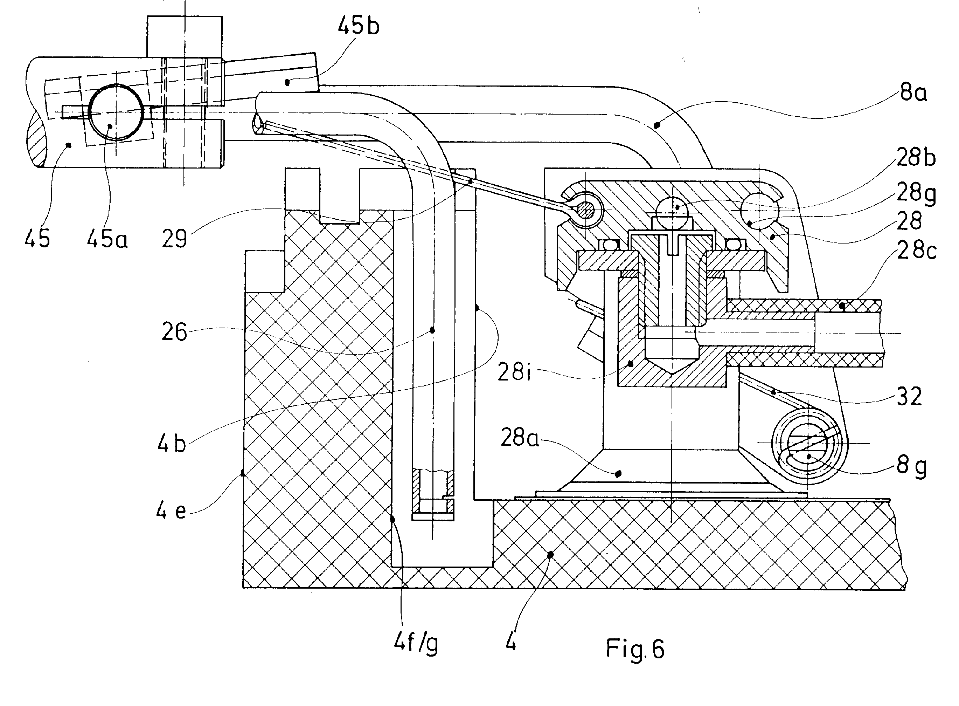

An den freien Enden dieser abgewinkelten Arme 8a und 8b ist die Saugleiste 28 mittels Hohllager 8d und Lagerbolzen 8g schwenkbar gelagert. In das Hohllager 8d mündet ein Anschlußrohr 8f, an das eine Vakuumpumpe bekannter, nicht dargestellter Art angeschlossen ist. Die Saugleiste 28 wird von einer aus den Fig. 5 und 6 ersichtlichen Schenkelfeder 32 in eine in bezug auf die Blattfilmebene schräg gestellte Lage gemäß Fig. 2 beaufschlagt.

An dem Quersteg des Halters 8 sind ferner Blasrohre 25 und 26 angeordnet, die der Stirnseite eines in einem Vorratsmagazin 4 befindlichen Blattfilm-Vorrats zugewandt sind und zur Unterstützung des Vereinzelungsvorgangs dienen. Die Blasrohre 25 und 26 tauchen hierzu in Aussparungen 4f bzw. 4g an der inneren Stirnwand 4b des Vorratsmagazins 4 ein (siehe Fig. 2, 5 und 6).

Außerdem ist an dem Quersteg des Halters 8 gemäß Fig. 5 ein Spiegelhalter 45 befestigt, an dem ein Träger 45a mit einem Planspiegel 45b zwecks Justage schwenkbar befestigt ist. Der Planspiegel 45b dient dazu, einen Infrarot-Lichtstrahl einer Reflexlichtschranke 44 (siehe Fig. 2) auf eine Reflexfolie 51 am Boden des Vorratsmagazins 4 zu lenken. Bei Entnahme des letzten Blattfilms wird hierdurch ein signal "Magazin leer" ausgelöst.

An dem Halter 8 ist mittels einer Klemmhalterung 50 ein Druckluftzylinder 31 befestigt (Fig. 5), mit einer Kolbenstange 31a und einem daran befestigten Einhängebolzen 31b (Fig. 2). Am einhängebolzen 31b ist das eine Ende eines Seilzugs 29 befestigt, der um eine Rolle 30 geleitet mit dem anderen Ende an der Saugleiste 28 gemäß Fig. 6 angreift. Der Seilzug 29 dient dazu, die Saugleiste 28 bzw. daran angeordnete Sauger 28a parallel zur Blattfilmebene zu stellen.

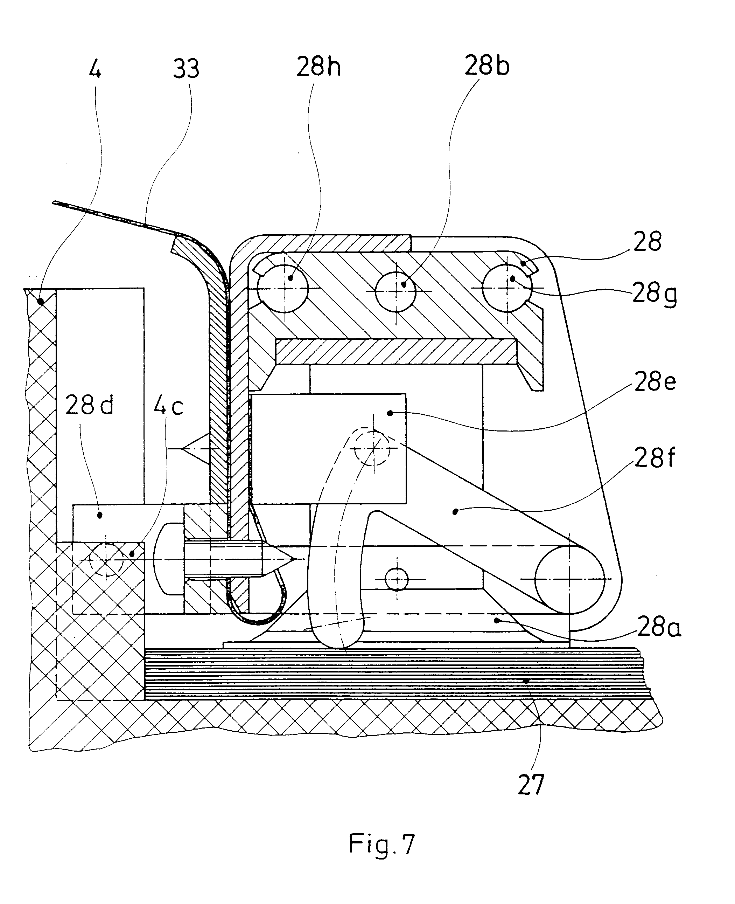

Die Saugleiste 28 weist gemäß Fig. 6 und 7 ein mit Längsbohrungen 28b, 28g und 28h versehenes Strangpreßteil auf, dessen Längsbohrung 28b mit vier Saugern 28a sowie über einen Winkelanschluß 28i und einen Schlauch 28c (siehe Fig. 4, 5 und 6) mit dem Hohllager 8d verbunden sind. Über das am Hohllager 8d befindliche Anschlußrohr 8f sind somit die Sauger 28a mit der Vakuumpumpe verbunden.

Die Längsbohrungen 28g und 28h dienen zur Befestigung des Seilzugs 29 bzw. von nicht näher bezeichneten Trag- und Bauteilen der Saugleiste 28.

An der Saugleiste 28 ist ein den Fig. 5 und 7 entnehmbarer, schwenkbar gelagerter Tasthebel 28f angeordnet, der in eine an der Saugleiste 28 befestigte Gabellichtschranke 28e eintaucht. Der Abtasthebel 28f tastet die Oberfläche eines Blattfilm-Vorrats 27 ab und dient in Verbindung mit der Gabellichtschranke 28e zur Steuerung der Absenkbewegung der Saugleiste 28 bzw. der ganzen Blattübergabevorrichtung 6 auf die jeweils funktionsgerechte Arbeitshöhe.

Ferner ist an der Saugleiste 28 eine weitere Gabellichtschranke 28d befestigt (siehe Fig. 5 und 7), in deren Bewegungsweg sich eine an den Vorratsmagazinen 4 angeordnete, außerhalb des Innenraumes liegende Rippe 4c befindet. Die Rippe 4c dient dazu, über die Gabellichtschranke 28d ein Signal "Magazin fast leer" auszulösen, wenn die Saugleiste 28 auf einen Reststapel von etwa 15 Blattfilmen absinkt und dabei über die Rippe 4c die Gabellichtschranke 28d unterbrochen wird.

Beide Gabellichtschranken 28d und 28e sind über eine flexible Leiterfolie 33 mit einer nicht dargestellten Steuer- und Anzeigevorrichtung verbunden.

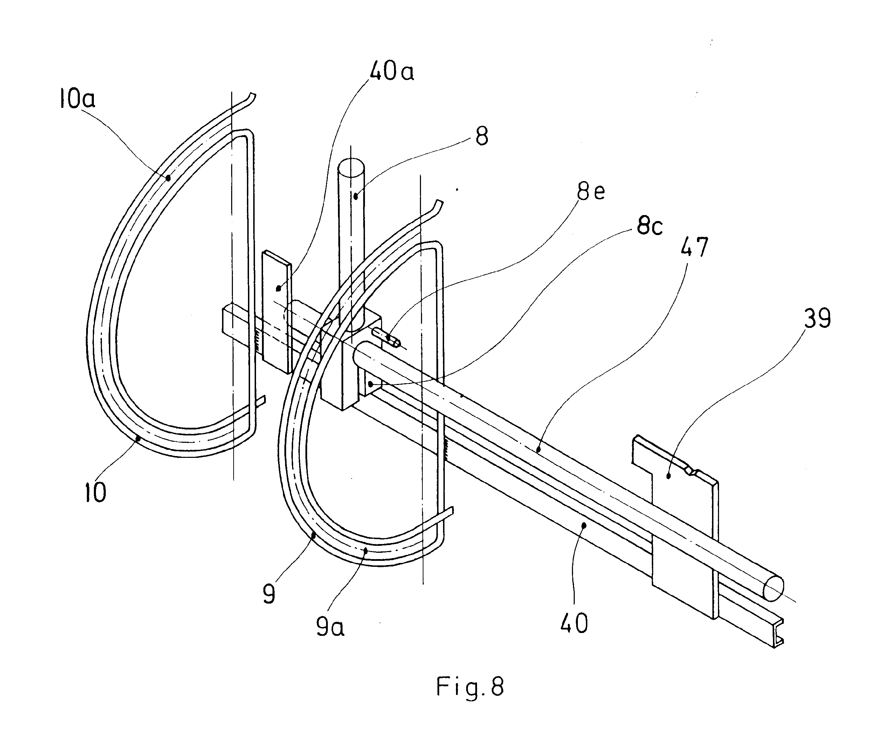

Die Baugruppe Blattfilmhalter (siehe Fig. 8) umfaßt zwei Blattfilmhalter 9 und 10, die an der Halteschiene 40 befestigt sind. An der Halteschiene 40 sind des weiteren ein Anschlag 39 und ein Halter 40a (siehe Fig. 2) für die Reflexlichtschranke 44 befestigt. Die Halteschiene 40 ist - wie bereits erwähnt - an dem Führungsteil 7 befestigt.

Die Blattfilmhalter 9 und 10 bestehen aus zwei gleichartig geformten, parallel angeordneten Drahtteilen, die kreisbogenförmige, parallele Führungskanäle 9a und 10a bilden. Die Führungskanäle 9a und 10a sind gemäß Fig. 8 so ausgebildet, daß sie eine oberhalb angeordnete, den Vorratsmagazinen 4 bzw. der Kassette 5 zugewandte Einführöffnung (siehe auch Fig. 3) mit Einführschrägen bilden und an dem anderen Ende des Führungskanals 9a bzw. 10a geschlossen sind. Die Führungskanäle 9a und 10a weisen gleiche Radien auf und sind konzentrisch zur Motorachse 47 angeordnet.

Die Blattfilmhalter 9 und 10 sind in einem solchen Abstand zueinander angeordnet, daß das kleinste zu verarbeitende Blattfilmformat sicher geführt wird.

Wie die Fig. 4 zeigt, ist die Saugleiste 28 zwischen den beiden Blattfilmhaltern 9 und 10 angeordnet. Die Sauger 28a der Saugleiste 28 drehen sich in bezug auf die Motorachse 47 auf einem in den Fig. 3 und 8 strichpunktiert angedeuteten Radius, auf dem auch die Führungskanäle 9a und 10a der Blattfilmhalter 9 bzw. 10 angeordnet sind.

Die Blattfilmhalter 9 und 10 dienen als Führung für einen von der Saugleiste 28 aus seinem Vorratsmagazin 4 entnommenen Blattfilm, zur Halterung desselben während einer vertikalen Hubbewegung der Blattfilmübergabevorrichtung 6 und als Führung bei der Übergabe in eine Kassette 5.

Die Drahtbügel-Baugruppe besteht aus einem Kupplungsteil 34, einem mehrarmigen Drahtbügel 34a bis 34g, einer Gabellichtschranke 34h und Auflageteilen 52 und 54. Die Drahtbügel-Baugruppe weist zwei kreuzförmig zusammengeschweißte Drahtteile (siehe Fig. 4) auf, deren Ausbildung, Anordnung und Funktion im folgenden beschrieben wird:

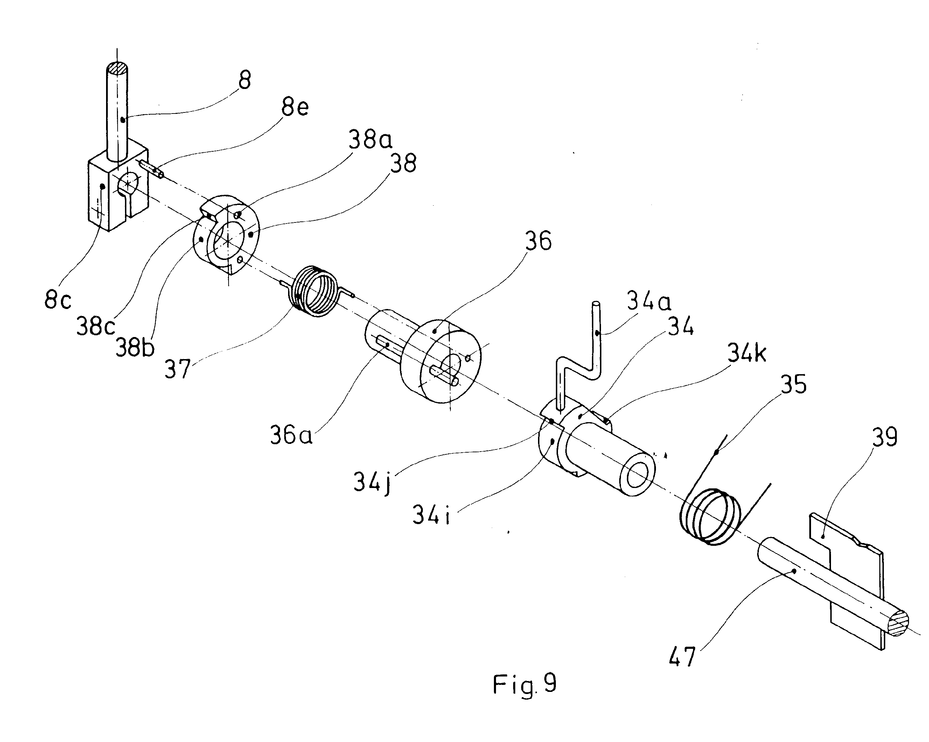

Die gesamte Drahtbügel-Baugruppe ist mit einem abgekröpften Drahtende 34a an dem Kupplungsteil 34 befestigt (siehe Fig. 4 und 9).

Das Kupplungsteil 34 ist auf der Motorachse 47 drehbar gelagert. Es wird von einer am Kupplungsteil 34 gelagerten Schenkelfeder 35, die sich an der Abkröpfung des Drahtendes 34a und an dem Anschlag 39 abstützt, gemäß Fig. 3 im Gegenuhrzeigersinn beaufschlagt.

An das abgekröpfte Drahtende 34a schließt sich ein gerader Teil 34b an, an dessen Ende ein flaches Auflageteil 52 (siehe Fig. 2 bis 4) befestigt ist. Eine Auflagefläche 52c des Auflageteils 52 verläuft geringfügig unterhalb des kleineren Radius des Führungskanals 9a (Fig. 3).

An einem quer zum geraden Drahtteil 34b angeschweißten Drahtteil 34c ist ein symmetrisch zum geraden Teil 34b und dem Saugleistenarm 8 verlaufendes Endteil 34d vorgesehen. An diesem Endteil 34d ist ein mit dem Auflageteil 52 gleichartiges Auflageteil 54 befestigt (siehe Fig. 2 und 4).

An den Auflageteilen 52 und 54 sind Klinken 53 bzw. 55 um Lager 48 bzw. 56 schwenkbar gelagert (siehe Fig. 2, 3 und 4).

Anhand der Fig. 3 wird eine der beiden gleichartigen Auflageteil-Klinke-Anordnungen 52 bzw. 53 beschrieben.

Die um das Lager 48 schwenkbare Klinke 53 weist einen abgewinkelten Lappen 53a auf, der in eine Aussparung 52d des Auflageteils 52 eingreift und zur Begrenzung des Schwenkwegs der Klinke 53 dient.

Die Klinke 53 weist eine Stirnfläche 53b auf, die - wie die Fig. 2 zeigt - geringfügig hinter einer inneren Stirnwand 4b des Vorratsmagazins 4 zurückversetzt ist. Dieselbe Fig. zeigt, daß die Klinke 55 (bzw. 53) in eine Vertiefung 4d der Vorderwand des Vorratsmagazins 4 einfällt.

Die Auflageteile 52 bzw. 54 sind gemäß Fig. 3 mit einer Schräge 52b versehen, die ein federndes Ausweichen der Drahtbügel-Baugruppe 34 gegenüber dem Vorratsmagazin 4 erlaubt.

Eine Anschlagfläche 52a des Auflageteils 52 stößt gemäß Fig. 2 an eine äußere Stirnfläche 4e des Vorratsmagazins 4 an.

Im mittleren Bereich des quer verlaufenden Drahtteils 34c ist ein abgekröpfter Bereich 34e vorgesehen, der gemäß Fig. 3 als Anschlag dient und hierzu gegen eine Wand der Ent- und Beladestation 18 stößt.

Die beiden Auflageteile 52 und 54 sowie der abgekröpfte Bereich 34e sind zwischen den beiden Blattfilmhaltern 9 und 10 angeordnet.

An dem quer verlaufenden Drahtteil 34c ist eine gemäß Fig. 4 seitlich über den Blattfilmhalter 9 hinausragende Abwinkelung 34f angeordnet, an die ein U-förmiger Halter 34g angeformt ist. An dem Halter 34g befindet sich eine Gabellichtschranke 34h, zwischen die ein im Führungskanal 9a, 10a der Blattfilmhalter 9, 10 befindlicher Blattfilm ragt. Der U-förmige Halter 34g umgreift das größtmögliche Format eines Blattfilms.

Die Gabellichtschranke 34h dient zur Doppelblatt-Erkennung, die nachfolgend noch beschrieben wird.

Die Drahtbügel-Baugruppe 34 und der Saugleistenarm 8 sind über eine Federkupplung 34 bis 38 miteinander gekoppelt, welche eine relative Bewegung zwischen beiden ermöglicht.

Die Federkupplung 34 bis 38 gemäß Fig. 9 ist folgendermaßen ausgeführt:

Eine Hülse 36 mit einem beidseitig herausragenden Mitnehmer 36a ist auf der Motorachse 47 drehbar angeordnet. Auf dem kleineren Durchmesser der Hülse 36 sind eine Drehfeder 37 und ein Mitnehmerring 38 angeordnet. Die Drehfeder 37 greift mit jeweils einem Ende in eine Bohrung der Hülse 36 und eine Bohrung des Mitnehmerrings 38 ein. Der Mitnehmerring 38 steht über eine Bohrung 38a mit einem am Befestigungsteil 8c des Saugleistenarms 8 angeordneten Stift 8e in Eingriff. Der Mitnehmerring 38 ist mit einer Freisparung 38b für den Mitnehmer 36a und mit einer Anschlagfläche 38c versehen.

Die Drehfeder 37 ermöglicht eine Relativbewegung zwischen dem Saugleistenarm 8 mit dem Mitnehmerring 38 und der Hülse 36, wobei deren Relativbewegung durch die Anschlagfläche 38c am Mitnehmerring 38 und den Mitnehmer 36a begrenzt ist.

An der anderen Seite der Hülse 36 ist ein auf der Motorachse 47 drehbar gelagertes Kupplungsteil 34 angeordnet. Das Kupplungsteil 34 weist eine Freisparung 34i für den Mitnehmer 36a, eine Anschlagfläche 34j und eine Anschlagstufe 34k auf.

Das Kupplungsteil 34 und die Hülse 36 sind in der Längsrichtung der Motorachse 47 durch einen Sicherungsring 57 gesichert (Fig. 4).

Das Kupplungsteil 34 wird, wie bereits beschrieben, von der Schenkelfeder 35 beaufschlagt, die schwächer als die Drehfeder 37 ausgebildet ist. Die Relativbewegung zwischen dem Kupplungsteil 34 und der Hülse 36 wird durch die Anschlagfläche 34j begrenzt, während die Anschlagstufe 34k in Anlage mit einem Festanschlag 39 eine Endstellung der Drahtbügel-Baugruppe 34 bestimmt.

Die Wirkungsweise der Vorrichtung ist folgende:

Die schaltungs- und steuerungstechnischen Maßnahmen zum automatischen Funktionsablauf der Filmeinlegevorrichtung sind nicht Gegenstand der vorliegenden Anmeldung. Sie können mit bekannten Mitteln je nach Zweckmäßigkeit ausgeführt werden.

Der Funktionsablauf wird daher im folgenden in vereinfachter Form auf die Schilderung der nacheinander ablaufenden Einzelfunktionen beschränkt.

Die Blattfilm-übergabevorrichtung 6 nimmt in ihrer Ausgangsstellung die Entnahmeposition am Magazin 4 ein. Die zu ent- bzw. beladende Kassette 5 wird an der Gerätevorderseite in Pfeilrichtung "A" gemäß Fig. 1 in die Ent- und Beladestation 18 eingeschoben, wo sie von einem Transportband 11 bis zu einem Endanschlag gefördert wird. Bei Erreichen der Endstellung wird der Kassettendeckel 5a durch nicht dargestellte Mittel geöffnet.

Mittels der Blattentnahmevorrichtung 12, 13, 13a wird der belichtete Film vom Saugarm 12 erfaßt und Transportrollen 14 zugeführt. Diese transportieren den belichteten Film über weitere Transportrollen 15 in Pfeilrichtung zu einem lichtdicht nachgeschalteten Filmentwicklungsgerät bekannter,nicht dargestellter Art.

Nach Maßgabe einer in der Ent- und Beladestation 18 vorgenommenen Ermittlung der Größe (Blattfilmformat) der eingeschobenen Kassette 5 wird die Blattfilm-übergabevorrichtung 6 aus ihrer Ausgangsstellung heraus in diejenige Entnahmeposition bewegt, in der sich ein Vorratsmagazin 4 mit dem ermittelten Blattfilmformat befindet.

Jeder Entnahmeposition I bis VII ist eine Kodierung zugeordnet, die das in den Vorratsmagazinen 4 jeweils befindliche Blattfilmformat angibt und einer Steuerungsvorrichtung mitteilt.

Nachdem nun das Blattfilmformat über die Größe der eingeschobenen Kassette 5 festgestellt wurde, bewegt der Schrittmotor 22 über das Kettenrad 22a und die Antriebskette 23 die Blattfilm-übergabevorrichtung 6 in die entsprechende Entnahmeposition.

Während dieser Hubbewegung nimmt die Blattfilm-Übergabevorrichtung 6 eine zurückgezogene Ausgangsstellung ein, in der sie gegenüber den Vorratsmagazinen 4 vertikal frei beweglich ist.

Entsprechend dem in der Ent- und Beladestation 18 ermittelten Blattfilmformat wird von der Steuervorrichtung der dem entsprechend ausgewählten Vorratsmagazin 4 benachbarte Stößel 20 elektromagnetisch ausgefahren. Gleichzeitig wird der Schieber 19 durch die Exzenterscheibe 21 nach oben bewegt, so daß der ausgefahrene Stößel 20 den Deckel 4a des angewählten Vorratsmagazins 4 öffnet und gemäß Fig. 1 in der Offenstellung hält.

Nachdem die angewählte Entnahmeposition der Blattfilm-Übergabevorrichtung 6 erreicht ist, erfolgt die Blattfilmentnahme aus dem entsprechenden Vorratsmagazin 4.

Hierzu wird der Saugleistenarm 8 durch den Motor 46 aus seiner zurückgezogenen Ausgangsstellung heraus im Uhrzeigersim (bezogen auf Fig. 2 und 3) geschwenkt.

Bei dieser Schwenkbewegung gelangt die Saugleiste 28 über den vorderen Bereich des Blattfilm-Vorratsstapels 27 in das Vorratsmagazin 4. Die Einschwenkbewegung der von dem Saugleistenarm 8 über die Federkupplung 36, 37, 38 mitgenommenen Drahtbügel-Baugruppe 34 ist beendet, wenn die Anschlagflächen 52a und 54b der Auflageteile 52 und 54 gegen die äußere Stirnfläche 4e des Vorratsmagazins 4 stoßen.

In dieser Stellung nehmen die Stirnflächen 53b und 55a der Klinken 53 und 55 eine definierte, gegenüber der inneren Stirnwand 4b des Magazins 4 leicht zurück versetzte Lage gemäß Fig. 2 ein.

Der Saugleistenarm 8 bewegt sich gegenüber der nun still stehenden Drahtbügel-Baugruppe 34 unter Spannen der Schenkelfeder 35 um einen geringen Betrag weiter im Uhrzeigersinn und wird durch eine nicht dargestellte Abschaltvorrichtung des Elektromotors 46 stillgesetzt, sowie durch eine nicht dargestellte Federrastvorrichtung in dieser Lage arretiert.

In der nun erreichten Entnahmestellung der Blattfilm-übergabevorrichtung 6 befinden sich die Klinken 53 und 55 in einer Vertiefung 4d der Vorderwand des Vorratsmagazins 4. Die Vertiefung 4d liegt noch innerhalb des von dem Deckel 4a lichtdicht überdeckten Bereichs.

Die Saugleiste 28 nimmt noch ihre in Fig.. 2 dargestellte Schrägstellung ein. Nachdem von der Gabellichtschranke 28d oder der Reflexlichtschranke 44 festgestellt wurde, daß in dem Vorratsmagazin 4 Blattfilme vorrätig sind, wird der Druckluftzylinder 31 aktiviert, der über den Seilzug 29 die Saugleiste 28 unter Spannen der Schenkelfeder 32 geradestellt, so daß die Sauger 28a parallel zur Blattfilmoberfläche ausgerichtet sind.

Dann wird mittels des Schrittmotors 22 die gesamte Blattfilm-Übergabevorrichtung 6 abgesenkt, bis der gemäß Fig. 7 auf der Blattfilmoberfläche aufliegende Tasthebel 28f der Saugleiste 28 deren Gabellichtschranke 28e unterbricht, wodurch der Schrittmotor 22 stillgesetzt wird.

Während des Absenkvorganges wird die Drahtbügel-Baugruppe 34 über die am Vorratsmagazin 4 entlang gleitenden Schrägen 52b der Auflageteile 52, 54 im Gegenuhrzeigersinn schwenkend weggedrückt. Die lose gelagerten Klinken 53, 55 passen sich durch Ausweichen entsprechend an.

In dieser Stellung wird über die Blasrohre 25, 26 Blasluft gegen die Stirnseite der obersten Blattfilme geblasen, um den obersten Blattfilm zu vereinzeln.

Durch Einschalten der Vakuumpumpe werden die Sauger 28a mit Unterdruck beaufschlagt, dann wird der Druckluftzylinder 31 belüftet, wodurch die Schenkelfeder 32 wirksam werden kann, die die Saugleiste 28 bzw. die Sauger 28a wieder schräg stellt.

Durch das Schrägstellen der Sauger 28a wird der oberste Blattfilm im vorderen Bereich hochgebogen und abgelöst, unterstützt von der erwähnten Blasluft.

Die Baugruppe Blattfilm-übergabevorrichtung 6 wird nun insgesamt wieder bis zur ursprünglichen Blattfilmentnahmeposition angehoben, wobei das Anheben um die gleiche Schrittanzahl wie das Absenken erfolgt.

Dabei kehrt die Drahtbügel-Baugruppe 34 unter Wirkung der Drehfeder 37 in ihre in Fig. 2 dargestellte Anlagestellung an der äußeren Stirnwand 4e des Vorratsmagazins 4 zurück und die Klinken 53, 55 fallen durch ihr Eigengewicht in die dargestellte Lage zurück.

Aus dieser Blattfilmentnahmeposition heraus erfolgt nun die eigentliche Blattfilmentnahme, indem der Saugleistenarm 8 seine Raststellung verlassend vom Elektromotor 46 im Gegenuhrzeigersinn geschwenkt wird.

Bei dieser Schwenkbewegung verbleibt die Drahtbügel-Baugruppe 34 unter der Wirkung der vorgespannten Drehfeder 37 zunächst in ihrer Anlagestellung am Vorratsmagazin 4, in der die Gabellichtschranke 34h über der Vorderseite des Vorratsmagazins 4 angeordnet ist.

Das vordere Ende des von den Saugern 28a erfaßten Blattfilms wird zwischen die Gabellichtschranke 34h gebracht, die feststellt, ob mehr als ein Blattfilm erfaßt wurde.

Wenn die Lichtschranke 34h mehr als einen Blattfilm an die Steuervorrichtung meldet, wird der Entnahmevorgang abgebrochen, die Schwenkrichtung des Saugleistenarmes 8 umgekehrt (Uhrzeigersinn) und die Blattfilme werden in das Vorratsmagazin 4 zurückgebracht und abgelegt.

Anschließend wird der Entnahmevorgang komplett wiederholt, wie beschrieben, so daß sich die aneinander haftenden Blattfilme durch die wiederholte Kippbewegung der Saugleiste 28 und die Einwirkung der Blasluft voneinander lösen können. Dann erfolgt wieder das Einführen in die Gabellichtschranke 34h zwecks Doppelblatt-Prüfung.

Insgesamt wird der Entnahmevorgang bis zu dreimal durchgeführt, wenn mehr als ein Blattfilm in die Gabellichtschranke 34h einläuft.

Sollte sich auch nach dreimaliger Durchführung des Entnahmevorganges immer noch mehr als ein Blattfilm zwischen der Gabellichtschranke 34h befinden, dann werden die Blattfilme wieder im Vorratsmagazin abgelegt, der Saugleistenarm nach Erreichen seiner Entnahmeposition entgegen dem Uhrzeigersinn in seine Ausgangsstellung zurückgeschwenkt und die komplette Blattfilm-Übergabevorrichtung 6 in die Ausgangsstellung bei der Entnahmeposition IV zurückgebracht. Gleichzeitig wird eine Störanzeige an der Gerätevorderseite ausgelöst.

Wenn sich während des Entnahmevorgangs ein am vereinzelten Blattfilm anhaftender zweiter Blattfilm ablöst, dann fällt er auf die Auflageflächen 52c und 54a der Auflageteile 52 und 54. Bei der durch die Gabellichtschranke 34h ausgelösten Zurückschwenkbewegung des Saugleistenarmes 8 (Uhrzeigersinn) gelangt der abgelöste Blattfilm an den Stirnflächen 53b der Klinken 53 bzw. 55 gezielt in das Vorratsmagazin 4 hinein.

Durch diese Maßnahme ist sichergestellt, daß ein abfallender Blattfilm nicht unkontrolliert auf den vorderen Rand der Vorratskassette 4 fallen kann, sondern gezielt in den Innenraum der Vorratskassette 4 gleitet.

Sobald während des Entnahmevorgangs in die Lichtschranke ein einzelner Blattfilm funktionsgerecht einläuft, wird dieser von der Saugleiste 28 in die Führungskanäle 9a, 10a der Blattfilmhalter 9, 10 hineingezogen.

Beim Weiterschwenken des Saugleistenarmes 8 im Gegenuhrzeigersinn entspannt sich die Drehfeder 37, so daß nun die schwächere Schenkelfeder 35 wirksam werden kann.

Bei dieser Schwenkbewegung erfaßt die Anschlagfläche 38c des Mitnehmerringes 38 den Mitnehmer 36a, so daß sich die Hülse 36 mitdreht.

Dem Mitnehmer 36a folgt das mit der Anschlagfläche 34j daran anliegende Kupplungsteil 34 unter der Wirkung der Schenkelfeder 35 nach, bis das Kupplungsteil 34 mit seiner Anschlagstufe 34k an dem Festanschlag 39 anstößt, so daß nun die gesamte Drahtbügel-Baugruppe 34 stillsteht.

Die Schwenkbewegung des Saugleistenarmes 8 im Uhrzeigersinn wird fortgesetzt, bis das hintere Ende des in den Blattfilmhalter 9, 10 eingezogenen Blattfilms die Gabellichtschranke 34h verläßt. Dabei gibt die Lichtschranke 34h ein Signal, das über die Gerätesteuervorrichtung den Elektromotor 46 ausschaltet, so daß der Saugleistenarm 8 stillsteht. Die Saugleiste 28 verbleibt in der gekippten Lage und die Sauger 28 halten weiterhin den Blattfilm fest.

Der Blattfilmentnahmevorgang ist nun beendet, und es schließt sich die Blattfilm-Übergabe in die Kassetten-Be- und Entladestation 18 an.

Hierzu wird die gesamte Blattfilm-übergabevorrichtung 6 durch den Schrittmotor 22 nach oben bewegt, bis in eine festgelegte Übergabeposition, in der der Schrittmotor 22 stillgesetzt wird.

In der Übergabeposition, die in Fig. 3 dargestellt ist, wird der Saugleistenarm 8 vom Elektromotor 46 im Uhrzeigersinn geschwenkt. Dabei wird der Blattfilm über den auf die offene Kassette 5 gerichteten Führungskanal 9a, 10a des Blattfilmhalters 9, 10 in die Kassette 5 hineingeschoben.

Während dieser Schwenkbewegung des Saugleistenarmes 8, wird über die Drehfeder 37 die Hülse 36 mitgenommen, deren Mitnehmer 36a über die Anschlagfläche 34j das Kupplungsteil 34 mitnimmt. Das Kupplungsteil 34 bewegt die Drahtbügel-Baugruppe 34 aus der linken Anschlagstellung heraus in eine rechte Anschlagstellung, in der deren abgekröpfter Bereich 34e an eine Außenwand der Be- und Entladestation 18 stößt und dann stillsteht.

Unter Spannen der Drehfeder 37 bewegt sich der Saugleistenarm 8 weiter im Uhrzeigersinn bis in eine Endstellung an einem nicht dargestellten Festanschlag.

In der Endstellung gemäß Fig. 3 angekommen, wird mittels des Druckluftzylinders 31 die Saugleiste 28 geradegestellt und die Sauger 28a werden belüftet.

Die Sauger 28a haben den Blattfilm soweit in die Kassette 5 eingeschoben, daß er nach dem Belüften der Sauger 28a genau in den vorgesehenen Raum der Kassette 5 hineinfällt.

Danach wird der Druckluftzylinder 31 belüftet, so daß sich die Saugleiste 28 unter Wirkung der Schenkelfeder 32 wieder schrägstellt.

Anschließend erfolgt eine Schwenkbewegung des Saugleistenarmes 8 im Gegenuhrzeigersinn bis in eine festgelegte, zurückgezogene Ausgangsposition, in der die Blattübergabevorrichtung 6 ungehindert vertikal bewegt werden kann. Die Drahtbügel-Baugruppe 34 wird mittels der Schenkelfeder 35 in derselben Richtung (Gegenuhrzeigersinn) bis an den Anschlag 39 bewegt.

Wenn die Saugleisten-Baugruppe 8 und die Drahtbügel-Baugruppe 34 ihre vorstehend erläuterte Ausgangsposition erreicht haben, wird die gesamte Blattübergabevorrichtung 6 von dem Schrittmotor 22 vertikal bis in die mittlere Entnahmeposition IV bewegt.

Aus der Entnahmeposition IV heraus kann dann ein neuer Blattfilmübergabe-Zyklus wie beschrieben gestartet werden.

Die in der Be- und Entladestation 18 mit einem Blattfilm bestückte Kassette 5 wird durch nicht dargestellte Mittel bekannter Art geschlossen und durch das Transportband 11 entgegen der Pfeilrichtung "A" aus dem Gerät ausgegeben.

Mit der Blattfilm-Übergabevorrichtung 6 können verschiedene Blattfilmformate gehandhabt werden. Der Saugarm 8 zieht dabei einen Blattfilm immer nur soweit im Gegenuhrzeigersinn in den Blattfilmhalter 9, 10 hinein, bis die Lichtschranke 34h das jeweilige Blattende signalisiert.

Im Falle des größtmöglichen Blattfilmformats passiert das Blattende die Lichtschranke 34h jedoch nicht, sondern unterbricht diese andauernd. Die Abschaltung der Saugarmbewegung im Gegenuhrzeigersinn erfolgt in diesem Falle (größtes Blattfilmformat) an einem nicht dargestellten Endanschlag.

Ergänzend werden nochmals die Signalgeber erläutert, die eine Anzeige bezüglich des in einer Vorratskassette 4 befindlichen Blattfilm-Vorrats geben.

So wird der zur Neige gehende Blattfilm-Vorrat (siehe Fig. 7) beispielsweise bei einem Vorrat von 15 Blatt dadurch angezeigt, daß die an der Saugleiste 28 angeordnete Gabellichtschranke 28d bei Erreichen einer "Rest-Stapelhöhe" von 15 Blatt durch die dieser Rest-Stapelhöhe zugeordnete Rippe 4c am Vorratsmagazin 4 unterbrochen wird.

Ferner ist eine "Vorratsmagazin leer"-Anzeige vorgesehen, welche von der Reflexlichtschranke 44 gesteuert wird und dann ein "Vorratsmagazin leer"-Signal erzeugt, wem der Infrarotlichtstrahl bei fehlendem Blattfilm von der Reflexfolie 51 am Boden der Vorratskassette 4 über den Planspiegel 45b zur Reflexlichtschranke 44 zurückgestrahlt wird.

Im folgenden werden weitere vorteilhafte Ausführungsbeispiele der Erfindung beschrieben, wobei sich die jeweilige Beschreibung auf die zum Verständnis der Vorrichtung wesentlichen Einzelheiten beschränkt.

Im übrigen können die weiteren Ausführungsbeispiele so wie zum ersten Ausführungsbeispiel beschrieben ausgebildet sein.

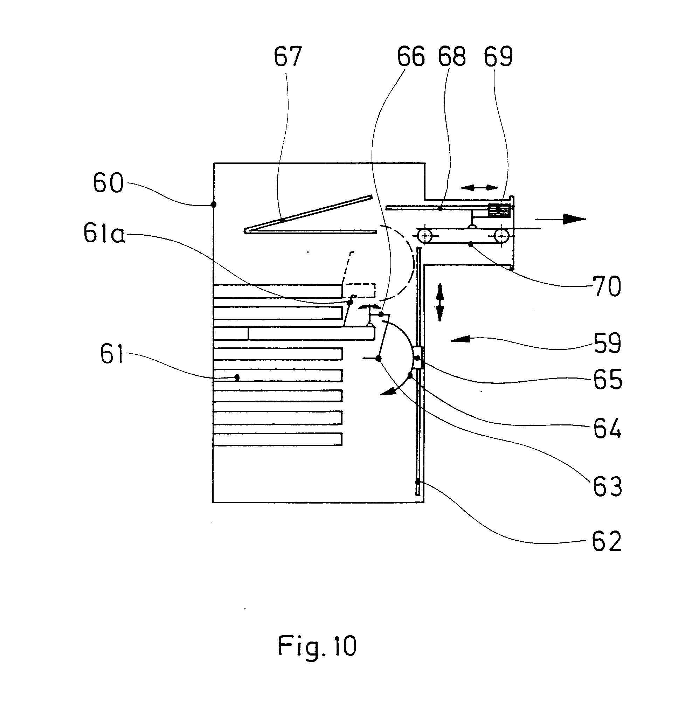

Bei einem zweiten Ausführungsbeispiel gemäß Fig. 10 sind in einem Gehäuse 60 acht Vorratsmagazine 61 dicht übereinander angeordnet. Abweichend vom ersten Ausführungsbeispiel ist bei dieser Vorrichtung das jeweils angewählte Vorratsmagazin 61 von einer nicht dargestellten Verschiebevorrichtung soweit nach vorn herauszuschieben, daß dessen Deckel 61a geöffnet werden kann. Diese Anordnung ermöglicht die Unterbringung einer größeren Anzahl von Vorratsmagazinen.

An einer Führungssäule 62 ist eine Blattfilm-übergabevorrichtung 59 mit einem Blattfilmhalter 64 gemäß dem ersten Ausführungsbeispiel und mit einer um ein Lager 63 schwenkbaren Saugvorrichtung 66 an einem Führungsteil 65 vertikal verschiebbar angeordnet.

Oberhalb der Vorratsmagazine 61 befindet sich eine Kassette 67, in die nach dem Entladen ein Blattfilm eingelegt werden soll.

Zum Entladen der Kassette 67 dient eine an einer Führung 68 horizontal bewegbare Saugvorrichtung 69, die einen entnommenen, belichteten Blattfilm auf ein Transportband 70 übergibt, das den Blattfilm in Pfeilrichtung in ein Filmentwicklungsgerät transportiert.

Aus einem angewählten, nach vorne geschobenen Vorratsmagazin 61 wird mittels der Saugvorrichtung 66 ein Blattfilm entnommen, in den Blattfilmhalter 64 eingezogen, nach oben transportiert und von der Saugvorrichtung 66 in die geöffnete Kassette 67 eingelegt.

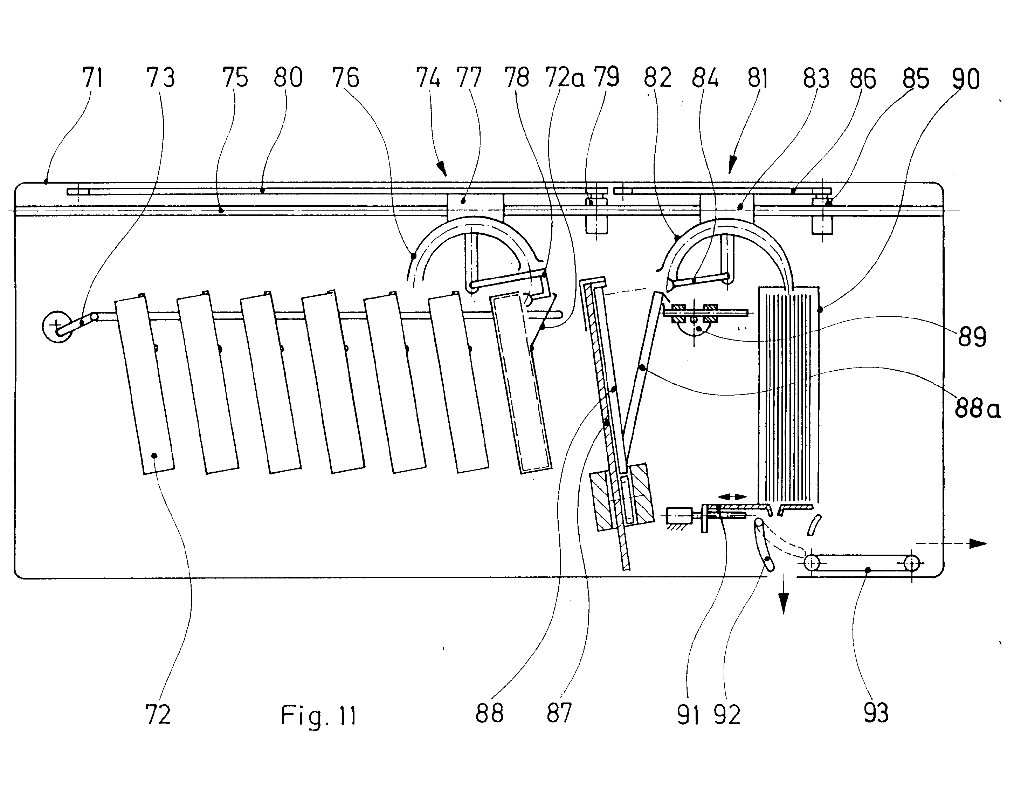

Ein drittes Ausführungsbeispiel gemäß Fig. 11 weist nebeneinander und aufrecht stehend angeordnete Vorratsmagazine 72, ein Speichermagazin 90 und zwei unabhängig steuerbare Blattfilm-Übergabevorrichtungen 74 bzw. 81 auf.

Das Gehäuse 71 dieser Vorrichtung ist auf einem nicht dargestellten Sockel in Arbeitshöhe angeordnet.

Die Deckel 72a der Vorratsmagazine 72 werden von einer Deckelöffnungsvorrichtung 73 beispielsweise gemäß Fig. 1 betätigt.

Neben den Vorratsmagazinen 72 ist ein Kassettenhalter 87 zur Aufnahme einer Kassette 88 angeordnet deren Deckel 88a von einer nicht näher beschriebenen Betätigungsvorrichtung 89 geöffnet bzw. geschlossen wird.

Neben dem Kassettenhalter 87 ist das Speichermagazin 90 angeordnet, das zur Aufnahme einer Anzahl von belichteten, aus der Kassette 88 entnommenen Blattfilmen dient.

Unterhalb des Speichermgazins 90 befindet sich eine Freigabevorrichtung 91 mit einer Schlitzöffnung, die horizontal verfahrbar ist und zur Freigabe eines einzelnen, durch Schwerkraft entnehmbaren Blattfilmes dient.

An die Freigabevorrichtung 91 schließt sich ein schwenkbares Leitelement 92 an, das einen freigegebenen Blattfilm wahlweise auf ein Transportband 93 umlenkt oder zum freien Fall in Pfeilrichtung freigibt.

Einem der durch Pfeilrichtung angegebenen Ausgänge für den belichteten Blattfilm ist ein Filmentwicklungsgerät nachgeschaltet.

Oberhalb der Vorratsmagazine 72 bzw. des Kassettenhalters 87 sind die Blattfilmübergabevorrichtungen 74 und 81 mittels Führungsteilen 77 bzw. 83 an einer Führungssäule 75 horizontal verschiebbar angeordnet.

Beide Blattfilm-Übergabevorrichtungen 74 bzw. 81 weisen einen Blattfilmhalter 76 bzw. 82 und schwenkbare Saugvorrichtungen 78 bzw. 84 auf, die im wesentlichen gemäß dem ersten Ausführungsbeispiel ausgebildet sind.

Die den Vorratsmagazinen 72 zugeordnete Blattfilmübergabevorrichtung 74 wird von einem Motor 79 über eine an dem Führungsteil 77 angreifende Antriebskette 80 bewegt, während die dem Kassettenhalter 87 zugeordnete Blattfilm-übergabevorrichtung 81 von einem Motor 85 über eine am Führungsteil 83 angreifende Antriebskette 86 bewegt wird.

Der Arbeitsablauf dieser Vorrichtung ist folgender:

Ein von der ersten Blattfilm-Übergabevorrichtung 74 aus einem angewählten Vorratsmagazin 72 mittels der Saugvorrichtung 78 entnommener und in den Blattfilmhalter 76 eingezogener Blattfilm, wird durch Bewegen der Blattfilm-Übergabevorrichtung 74 nach rechts bis über die geöffnete Kassette 88 bewegt.

Dort wird der entnommene Blattfilm durch Umkehren der Drehrichtung (Uhrzeigersinn) der Saugvorrichtung 78 in die Kassette 88 eingelegt und die Saugvorrichtung 78 schwenkt im Gegenuhrzeigersinn in den Blattfilmhalter 76 zurück. Nachdem die Saugvorrichtung 78 ihre zurückgezogene Stellung erreicht hat, fährt die Blattfilm-übergabevorrichtung 74 nach links in eine Ausgangsstellung zurück.

Die Kassette 88 wird von der Betätigungsvorrichtung 89 geschlossen und kann entnommen werden bzw. wird selbsttätig aus dem Gerät ausgegeben.

Eine mit einem belichteten Blattfilm versehene Kassette 88 wird in den Kassettenhalter 87 eingegeben und von der Betätigungsvorrichtung 89 geöffnet.

Der belichtete Blattfilm wird nun von der zweiten Blattfilm-übergabevorrichtung 81 aus der Kassette 88 entnommen, indem die Blattfilm-Übergabevorrichtung 81 nach links läuft und die ausgeschwenkte Saugvorrichtung 84 auf dem Blattfilm aufsetzt.

Nachdem der Blattfilm von der Saugvorrichtung 84 erfaßt wurde, wird zunächst der vordere Bereich des Blattfilms durch Verschieben der Blattfilm-übergabevorrichtung 81 nach rechts aus der Kassette 88 herausgeschwenkt und anschließend von der Saugvorrichtung 84 im Uhrzeigersinn drehend in den Blattfilmhalter 82 hineingezogen.

Danach wird die Blattfilm-Übergabevorrichtung nach rechts bewegt, bis das rechte Ende des Blattfilmhalters 82 über dem Speichermagazin 90 steht. In dieser Stellung angekommen, wird die Saugvorrichtung 84 belüftet und während der Blattfilm im Blattfilmhalter 82 verbleibt, im Gegenuhrzeigersinn geschwenkt. Aus der linken Endstellung der Saugvorrichtung 84 heraus, wird der Blattfilm von der Saugvorrichtung 84 wiederum erfaßt und im Uhrzeigersinn schwenkend von dieser in das Speichermagazin 90 hineingeschoben. Der Blattfilm ist nun soweit aus dem Blattfilmhalter 82 herausgeschoben worden, daß er beim Belüften der Saugvorrichtung 84 durch sein Eigengewicht in das Speichermagazin 90 hineinfällt.

Nach der Freigabe des Blattfilms schwenkt die Saugvorrichtung 84 im Gegenuhrzeigersinn in eine zurückgezogene Stellung in den Blattfilmhalter 82 zurück.

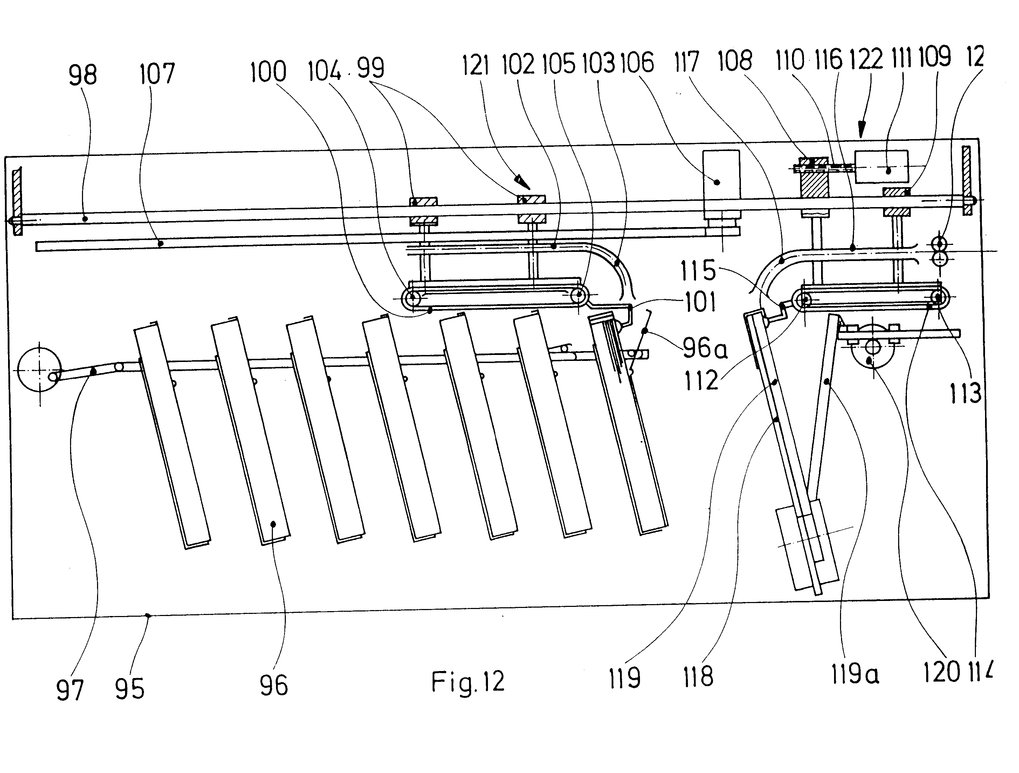

Bei einem vierten Ausführungsbeispiel gemäß Fig. 12 ist ebenfalls eine horizontale Anordnung der Vorrichtung vorgesehen.

In einem Gehäuse 95 sind Vorratsmagazine 96 nebeneinander und aufrecht stehend angeordnet. Die Deckel 96a der Vorratsmagazine 96 werden von einer Deckelöffnungsvorrichtung 97 wie bereits beschrieben betätigt.

In einem Kassettenhalter 118 ist eine Kassette 119 angeordnet, die von einer Betätigungsvorrichtung 120 geöffnet bzw. geschlossen wird.

Oberhalb der Vorratsmagazine 96 bzw. des Kassettenhalters 118 sind Blattfilm-Übergabevorrichtungen 121 und 122 mittels Führungsteilen 99 bzw. 108 und 109 an einer Führungssäule 98 horizontal verschiebbar angeordnet.

Die Blattfilm-Übergabevorrichtungen 121 und 122 weisen eine von den bisher beschriebenen Ausführungsbeispielen abweichende Ausbildung auf, sind jedoch in bezug auf die raumsparende Gestaltung und die schonende und zuverlässige Handhabung der Blattfilme mit denselben Vorteilen ausgestattet.

Die den Vorratsmagazinen 96 zugeordnete Blattfilmübergabevorrichtung 121 wird wie zum dritten Ausführungsbeispiel bereits beschrieben von einem Motor 106 über eine am Führungsteil 99 befestigte Antriebskette 107 bewegt.

An dem Führungsteil 99 ist ein Blattfilmhalter angeordnet, der einen geraden Führungskanal 102 und einen daran anschließenden, zu den Vorratsmagazinen 96 hin offenen, kreisbogenförmigen Führungskanal 103 zur Aufnahme des Blattfilmes aufweist.

Der Führungskanal 102, 103 kann ähnlich wie zu Fig. 8 beschrieben, aus zwei gleichartig geformten, parallel angeordneten Drahtteilen bestehen.

An dem Führungsteil 99 sind ferner eine Antriebswelle 105 und eine Umlenkwelle 104 angeordnet, an denen ein Zahnriemen 100 gelagert ist.

An dem Zahnriemen 100 ist eine Saugvorrichtung 101 befestigt, die im Bereich der Antriebswelle 105 um einen dem Führungskanal 103 entsprechenden Radius schwenkbar und im Bereich zwischen den Wellen 104, 105 parallel zum Führungskanal 102 bewegbar ist.

Oberhalb des Kassettenhalters 118 ist eine der Blattfilm-Übergabevorrichtung 121 ähnliche, zweite Blattfilm-Übergabevorrichtung 122 angeordnet.

Die zweite Blattfilm-Übergabevorrichtung 122 ist mittels Führungsteilen 108 und 109 ebenfalls an der Führungssäule 98 verschiebbar gelagert und mittels einer am Führungsteil 108 angreifenden Spindel 110 von einem Motor 111 bewegbar.

Ein an den Führungsteilen 108, 109 angeordneter Blattfilmhalter weist ebenfalls einen geraden Führungskanal 116 und einen daran anschließenden kreisbogenförmigen, zum Kassettenhalter 118 hin offenen Führungskanal 117 auf.

Den Führungskanälen 116 und 117 ist eine Saugvorrichtung 115 zugeordnet, die an einem an einer Antriebswelle 112 und einer Umlenkwelle 113 angeordneten Zahnriemen 114 befestigt ist. Die Saugvorrichtung 115 ist, wie zur Blattfilm-Übergabevorrichtung 121 beschrieben, parallel zu den Führungskanälen 116 und 117 geführt.

In Verlängerung zum geraden Führungskanal 116 sind Transportrollen 123 angeordnet, die einen belichteten Blattfilm in Pfeilrichtung zu einem nachgeschalteten, nicht dargestellten Filmentwicklungsgerät transportieren.

Die Wirkungsweise der Vorrichtung gemäß Fig. 12 ist ähnlich wie die zu Fig. 11 beschrieben:

Ein von der Saugvorrichtung erfaßter Blattfilm wird aus dem angewählten Vorratsmagazin 96 entnommen und in die Führungskanäle 102, 103 hineingezogen.

Danach wird die gesamte Blattfilm-Übergabevorrichtung 121 nach rechts bewegt, bis das offene Ende des Führungskanals 103 über der geöffneten Kassette 119 liegt.

Durch Umkehren der Bewegungsrichtung des Zahnriemens 100 wird der entnommene Blattfilm von der Saugvorrichtung 101 in die Kassette 119 hineingeschoben und durch Belüften derselben zum Einfallen in die Kassette 119 freigegeben.

Danach läuft die Saugvorrichtung 101 und anschließend die gesamte Blattfilm-Übergabevorrichtung 121 in ihre Ausgangsstellung zurück.

Die Kassette 119 wird danach von der Betätigungsvorrichtung 120 geschlossen und ist dann zur Entnahme aus dem Gerät bereit.

Wenn eine mit einem belichteten Blattfilm bestückte Kassette 119 in den Kassettenhalter 118 eingelegt wird, erfolgt ein Öffnen derselben durch die Betätigungsvorrichtung 120.

Danach wird in einer rechten Ausgangsstellung zunächst die Saugvorrichtung 115 ausgeschwenkt. Anschließend erfolgt eine Bewegung der gesamten zweiten Blattfilm-Übergabevorrichtung 122 in die in Fig. 12 dargestellte, linke Stellung, in der die Saugvorrichtung 115 den belichteten Blattfilm erfassen kann.

Nach dem Erfassen (Ansaugen) des Blattfilmes wird die Blattfilm-Übergabevorrichtung 122 wieder in die rechte Ausgangsstellung bewegt, die Saugvorrichtung 115 in Gang gesetzt und der entnommene Blattfilm in Pfeilrichtung zu den Transportrollen 123 gezogen. Die Transportrollen 123 übernehmen den weiteren Transport in das Filmentwicklungsgerät hinein.

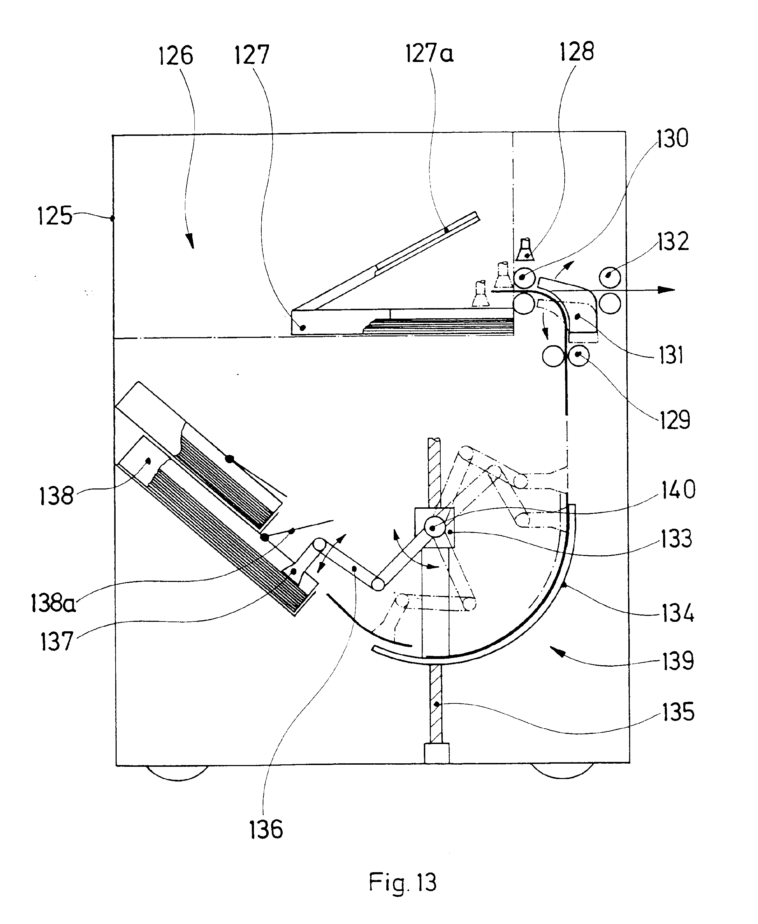

Ein fünftes Ausführungsbeispiel ist in der Fig. 13 dargestellt.

Bei dieser Vorrichtung sind in einem Gehäuse 125 schrägliegende und dicht übereinander angeordnete Vorratsmagazine 138 vorgesehen, die soweit zueinander versetzt angeordnet sind, daß sich deren Deckel 138a ungehindert öffnen lassen.

Die Vorrichtung weist eine Blattübergabevorrichtung 139 mit einem Führungsteil 133 auf, das mittels eines nicht dargestellten Motors an einer mit einer Verzahnung versehenen Führungssäule 135 vertikal bewegbar geführt ist.

An dem Führungsteil 133 ist eine kreisbogenförmige, schalenartige Blattführung 134 sowie eine an einer Motorachse 140 befestigte Saugvorrichtung mit Saugleistenarmen 136 und einer Saugleiste 137 angeordnet.

Die Blattführung 134 ist konzentrisch zur Motorachse 140 eines nicht dargestellten Motors angeordnet.

Die Saugleistenarme 136 werden durch nicht dargestellte Führungsmittel bekannter Art, beispielsweise eine Kulissenführung, in einer vorgegebenen Bahn geführt.

Oberhalb der Blattübergabevorrichtung 139 ist eine Kassetten-Ent- und Beladestation 126 für eine Kassette 127 angeordnet.

Neben der Kassetten-Ent- und Beladestation 126 sind eine Saugleiste 128, Transportrollen 129, 130 und 132 sowie ein bewegliches Leitelement 131 angeordnet.

Die Wirkungsweise dieser Vorrichtung ist folgende:

Nachdem die Kassette 127 in die Kassetten-Ent- und Beladestation 126 eingegeben wurde, wird in bekannter, nicht dargestellter Weise der Kassettendeckel 127a geöffnet. Dann wird der belichtete Blattfilm von der Saugleiste 128 erfaßt und Transportrollen 130 zugeführt, die den Blattfilm über weitere Transportrollen 132 einem in Pfeilrichtung nachgeschalteten nicht dargestellten Filmentwicklungsgerät zuführen. Das Leitelement 131 nimmt dabei eine untere, gestrichelt dargestellte Stellung ein, in der es außerhalb des Bewegungsweges des Blattfilms liegt.

Nachdem der belichtete Blattfilm heraustransportiert wurde, wird das Leitelement 131 in seine dargestellte obere Stellung bewegt.

Die Blattfilm-Übergabevorrichtung 139 wird auf die Höhe des angewählten Vorratsmagazins 138 bewegt. Danach wird durch Drehen der Motorachse 140 im Uhrzeigersinn die Saugleiste 137 über das Vorratsmagazin 138 geschwenkt und dort auf den Blattfilm-Vorratsstapel abgesenkt. Die Saugleiste 137 erfaßt den obersten Blattfilm und durch Umkehren der Drehrichtung der Motorachse (Gegenuhrzeigersinn) wird die Saugleiste 137 aus dem Vorratsmagazin 138 ausgehoben und dabei der Blattfilm vom Reststapel vereinzelt.

Zur Vereinzelung eines Blattfilms können die im ersten Ausführungsbeispiel beschriebenen Maßnahmen wie Kippen der Saugleiste und Blasluftunterstützung angewandt werden.

Der so vereinzelte Blattfilm wird von der Saugleiste 137 an die Blattführung 134 herangeführt und je nach Größe des Blattfilms bis in eine der strichpunktiert dargestellten Endstellungen hochgezogen.

Anschließend wird die gesamte Blattfilm-Übergabevorrichtung 139 vertikal nach oben bewegt, bis das vordere Ende des Blattfilmes von den Transportrollen 129 erfaßt wird. Danach wird die Saugleiste 137 belüftet und die Transportrollen 129 und 130 transportieren den Blattfilm über das Leitelement 131 in die geöffnete Kassette 127 hinein.

Nachdem sich der Blattfilm in der Kassette 127 befindet, wird diese durch eine nicht dargestellte Vorrichtung geschlossen und anschließend aus dem Gerät ausgegeben.

Abweichend von den beschriebenen Ausführungsbeispielen können die Führungskanäle oder -flächen der Blattfilmhalter auch eine von der Kreisbogenform abweichende andere Bogenform, beispielsweise mit unterschiedlichen Radien, aufweisen, wenn dies für die Führung und/oder Halterung der Blattfilme zweckmäßig ist.

Eine andere Ausgestaltung des Blattfilmhalters kann auch darin bestehen (nicht dargestellt), die Führungskanäle ausschließlich gerade auszubilden und parallel zur Blattfilmebene oder in einer Schräglage anzuordnen.

**Patentansprüche**

1. Vorrichtung zum automatischen Einlegen eines Blattfilms in eine Blattfilm-Kassette, mit mehreren Blattfilm-Vorratsmagazinen und mit einer zwischen einem angewählten Vorratsmagazin und einer Kassetten-Ladestation bewegbaren Blattfilm-Übergabevorrichtung, dadurch gekennzeichnet, daß die Blattfilm-Übergabevorrichtung (6, 59, 74, 81, 121, 122, 139) einen Blattfilmhalter (9, 10, 64, 76, 82, 102, 103, 116, 117, 134) mit einer Führungsbahn (9a, 10a, 64, 76, 82, 102, 103, 116, 117, 134) zur Aufnahme eines Blattfilmes aufweist, daß der Blattfilmhalter (9, 10, 64, 76, 82, 102, 103, 116, 117, 134) eine auf der Führungsbahn (9a, 10a, 64, 76, 82, 102, 103, 116, 117, 134) bewegbare Blattgreifvorrichtung (8, 28; 66, 78, 84, 101, 115, 136, 137) aufweist und daß der Blattfilmhalter (9, 10, 64, 76, 82, 102, 103, 116, 117, 134) und die Blattgreifvorrichtung (8, 28, 66, 78, 84, 101, 115, 136, 137) als eine gemeinsam bewegbare Einheit (6, 59, 74, 81, 121, 122, 139) ausgebildet sind.

2. Vorrichtung nach Anspruch 1, dadurch gekennzeichnet, daß die Führungsbahn (9a, 10a, 64, 76, 82 103, 117, 134) des Blattfilmhalters (9, 10, 64, 76, 82, 103, 117, 134) bogenförmig, vorzugsweise kreisbogenförmig ausgebildet ist.

3. Vorrichtung nach Anspruch 1, dadurch gekennzeichnet, daß die Führungsbahn des Blattfilmhalters (102, 103 bzw. 116, 117) bereichsweise gerade (102, 116) und bereichsweise kreisbogenförmig (103, 117) ausgebildet ist.

4. Vorrichtung nach einem oder mehreren der Ansprüche 1 bis 3, dadurch gekennzeichnet, daß die Führungsbahn des Blattfilmhalters (9, 10, 64, 76, 82, 102, 103, 116, 117) als Führungskanal ausgebildet ist.

5. Vorrichtung nach einem oder mehreren der Ansprüche 1 bis 3, dadurch gekennzeichnet, daß die Führungsbahn des Blattfilmhalters (134) schalenförmig ausgebildet ist.

6. Vorrichtung nach einem oder mehreren der Ansprüche 1 bis 5, dadurch gekennzeichnet, daß ein Ende der bogenförmigen Führungsbahn (9a, 10a, 64, 76, 82, 103, 117, 134) in die Blattfilmebene mündet.

7. Vorrichtung nach einem oder mehreren der Ansprüche 1 bis 6, dadurch gekennzeichnet, daß der Blattfilmhalter (9, 10) aus bogenförmig geformten Drahtteilen besteht.

8. Vorrichtung nach einem oder mehreren der Ansprüche 1 bis 7, dadurch gekennzeichnet, daß der Blattfilmhalter (9, 10, 64, 76, 82, 102, 103, 116, 117, 134) an einem geradlinig geführten Führungsteil (7, 65, 77, 83, 99, 108, 109, 133) befestigt ist und daß die Blattgreifvorrichtung (8, 28, 66, 78, 84, 101, 115, 136, 137) um das Zentrum des bogenförmigen Blattfilmhalters (9, 10, 64, 76, 82, 103, 117, 134) und konzentrisch zu dessen Führungsbahn schwenkbar gelagert ist.

9. Vorrichtung nach einem oder mehreren der Ansprüche 1 bis 8, dadurch gekennzeichnet, daß die Blattgreifvorrichtung (8, 28, 66, 78, 84, 136, 137) an einer Motorachse (47, 140) eines Motors (46) befestigt ist.

10. Vorrichtung nach einem oder mehreren der Ansprüche 1 bis 9, dadurch gekennzeichnet, daß die Blattgreifvorrichtung (8) eine kippbar gelagerte Saugleiste (28) aufweist, daß die Saugleiste (28) von einer Feder

12

(32) in eine erste, schräg zur Blattfilmebene angeordnete Lage beaufschlagt wird und daß die Saugleiste (28) über einen pneumatisch betätigten Seilzug (29) in eine zweite, parallel zur Blattfilmebene angeordnete Lage bewegbar ist.

11. Vorrichtung nach einem oder mehreren der Ansprüche 1 bis 10, dadurch gekennzeichnet, daß an der Saugleiste (28) ein auf der Blattfilmoberfläche aufliegendes, bewegliches Tastglied (28f) angeordnet ist und daß im Bewegungsweg des Tastgliedes (28f) eine an der Saugleiste (28) befestigte Gabellichtschranke (28e) angeordnet ist.

12. Vorrichtung nach einem oder mehreren der Ansprüche 1 bis 11, dadurch gekennzeichnet, daß an der Saugleiste (28) eine zweite Gabellichtschranke (28d) angeordnet ist und daß die zweite Gabellichtschranke (28d) einem eine Reststapelhöhe anzeigenden Vorsprung (4c) einer Vorratskassette (4) zugeordnet ist.

13. Vorrichtung nach einem oder mehreren der Ansprüche 1 bis 12, dadurch gekennzeichnet, daß die Saugleiste (28) ein Strangpreßteil mit Längsbohrungen (28b, 28g, 28h) aufweist und daß die Längsbohrungen (28b bzw. 28g, 28h) mit Saugern (28a) verbunden sind bzw. zur Befestigung von Bauteilen dienen.

14. Vorrichtung nach einem oder mehreren der Ansprüche 1 bis 13, dadurch gekennzeichnet, daß an der Blattgreifvorrichtung (8, 28) der Blattfilm-Vorderkante zugewandte Blasrohre (25, 26) angeordnet sind.

15. Vorrichtung nach einem oder mehreren der Ansprüche 1 bis 14, dadurch gekennzeichnet, daß auf der Motorachse (47) eine Drahtbügel-Baugruppe (34) drehbar gelagert ist und daß die Drahtbügel-Baugruppe (34) und die Blattgreifvorrichtung (8, 28) über eine Kraft- und/oder formschlüssig wirkende Kupplung (34, 35, 36, 37, 38) relativ zueinander beweglich miteinander verbunden sind.

16. Vorrichtung nach Anspruch 15, dadurch gekennzeichnet, daß die Drahtbügel-Baugruppe (34) einen U-förmig einen Blattfilm umgreifenden Arm (34g) aufweist und das an dem Arm (34g) eine Gabellichtschranke (34h) angeordnet ist.

17. Vorrichtung nach einem oder mehreren der Ansprüche 1 bis 16, dadurch gekennzeichnet, daß an dem Führungsteil (7) eine Reflexlichtschranke (44) angeordnet ist, daß an der Blattgreifvorrichtung (8) ein Spiegel (45b) angeordnet ist und daß die Reflexlichtschranke (44) und der Spiegel (45b) auf eine am Boden des Vorratsmagazins (4) befindliche Reflexfolie (51) ausgerichtet sind.

18. Vorrichtung nach einem oder mehreren der Ansprüche 1 bis 17, dadurch gekennzeichnet, daß an der Drahtbügel-Baugruppe (34) Blattfilm-Auflageteile (52, 54) angeordnet sind und daß die Blattfilm-Auflageteile (52, 54) unterhalb des kleineren Radius des Führungskanals (9a, 10a) des Blattfilmhalters (9, 10) angeordnet sind.

19. Vorrichtung nach einem oder mehreren der Ansprüche 1 bis 18, dadurch gekennzeichnet, daß die Blattfilm-Auflageteile (52, 54) der äußeren Stirnwand (4e) der Vorratsmagazine (4) zugeordnete Anschlagflächen (52a, 54b) aufweisen.

20. Vorrichtung nach einem oder mehreren der Ansprüche 1 bis 19, dadurch gekennzeichnet, daß an den Blattfilm-Auflageteilen (52, 54) schwenkbar gelagerte Klinken (53, 55) angeordnet sind und daß die Klinken (53, 55) der inneren Stirnwand (4b) der Vorratskassette (4) zugeordnete Stirnflächen (53b, 55a) aufweisen.

21. Vorrichtung nach einem oder mehreren der Ansprüche 1 bis 4 und 6 bis 20, dadurch gekennzeichnet, daß der Blattfilmhalter aus zwei gleichartig geformten, in einem Abstand und parallel zueinander angeordneten Drahtteilen (9, 10) mit kreisbogenförmigen und parallelen Führungskanälen (9a, 10a) besteht, daß die Saugvorrichtung (8, 28) und die Drahtbügel-Baugruppe (34) zwischen den beiden Drahtteilen (9, 10) angeordnet ist und daß der U-förmige Arm (34g) mit der Gabellichtschranke (34h) außerhalb eines der beiden Drahtteile (9 bzw. 10) angeordnet ist.

22. Vorrichtung nach einem oder mehreren der Ansprüche 1 bis 4, 6, 7 und 8, dadurch gekennzeichnet, daß eine Saugvorrichtung (101 bzw. 115) sowohl parallel zu einem geraden Führungskanal (102 bzw. 116) als auch parallel zu einem daran anschließenden bogenförmigen Führungskanal (103 bzw. 117) geführt ist.

23. Vorrichtung nach Anspruch 22, dadurch gekennzeichnet, daß die Saugvorrichtung (101 bzw. 115) an einem an Wellen (104, 105 bzw. 112, 113) gelagerten, endlosen Riemen (100 bzw. 114) angeordnet ist.

24. Vorrichtung nach Anspruch 22 und 23, dadurch gekennzeichnet, daß eine der Wellen (105 bzw. 112) im Zentrum der bogenförmigen Führungsbahn (103 bzw. 117) angeordnet ist und daß der Riemen (100 bzw. 114) parallel zum geraden Führungskanal (102 bzw. 116) geführt wird.

25. Vorrichtung nach einem oder mehreren der Ansprüche 1 bis 24, dadurch gekennzeichnet, daß die Blattfilmübergabevorrichtung (6, 59, 139) vertikal und entlang der Stirnseiten von liegend übereinander angeordneten Vorratsmagazinen (4, 61, 138) und einer darüber angeordneten Einzel-Blattfilmkassette (5, 67, 127) bewegbar ist.

26. Vorrichtung nach einem oder mehreren der Ansprüche 1 bis 24, dadurch gekennzeichnet, daß die Blattfilmübergabevorrichtung (74, 81; 121, 122) horizontal und entlang der Stirnseiten von stehend nebeneinander angeordneten Vorratsmagazinen (72, 96) und einer daneben angeordneten Einzel-Blattfilmkassette (88, 119) bewegbar ist.

**Claims**

1. Apparatus for automatic insertion of a sheet film in a sheet-film cassette comprising several sheet-film supply magazines and a sheet-film transfer mechanish which can be moved between a selected supply magazine and a cassette-loading station, characterized in that the sheet-film transfer mechanism (6, 59, 74, 81, 121, 122, 139) comprises a sheet-film holder (9, 10, 64, 76, 82, 102, 103, 116, 117, 134) having a guide path (9a, 10a, 64, 76, 82, 102, 103, 116, 117, 134) receiving a sheet film, that said sheet-film holder (9, 10, 64, 76, 82, 102, 103, 116, 117, 134) comprises, on said guide path (9a, 10a, 64, 76, 82, 102, 103, 116, 117, 134), a movable sheet-gripping mechanism (8, 28, 66, 78, 84, 101, 115, 136, 137), and that said sheet-filmp holder (9, 10, 64, 76, 82, 102, 103, 116, 117, 134) and said sheet-gripping mechanism (8, 28, 66, 78, 84, 101, 115, 136, 137) are constructed as a unit (6, 59, 74, 81, 121, 122, 139) which can be moved together.

2. Apparatus according to claim 1, characterized in that said guide path (9a, 10a, 64, 76, 82, 103, 117, 134) of said sheet-film holder (9, 10, 64, 76, 82, 103, 117, 134) is arcuate, preferably partially circular.

3. Apparatus according to claim 1, characterized in that said guide path of said sheet-film holder (102, 103 and 116, 117) comprises straight (102, 116) and circular (103, 117) sections.

4. Apparatus according to one or more of claims 1 through 3, characterized in that said guide path of said sheet-film holder (9, 10, 64, 76, 82, 102, 103, 116, 117) is configured as a guide channel.

5. Apparatus according to one or more of claims 1 through 3, characterized in that said guide path of said sheet-film holder (134) is configured as a tray.

6. Apparatus according to one or more of claims 1 through 5, characterized in that one end of the arcuate guide path (9a, 10a, 64, 76, 82, 103, 117, 134) defines the sheet-film plane.

7. Apparatus according to one or more of claims 1 through 6, characterized in that said sheet-film holder (9, 10) consists of arcuate wire elements.

8. Apparatus according to one or more of claims 1 through 7, characterized in that said sheet-film holder (9, 10, 6 4, 7 6, 82, 102, 103, 116, 117, 134) is mounted to a guide element (7, 65, 77, 83, 99, 108, 109, 133) moved in a straight line and that said sheet-gripping mechanism (8, 28, 66, 78, 84, 101, 115, 136, 137) is pivotally supported at the center of the curve defined by said arcuate sheet-film holder (9, 10, 64, 76, 82, 103, 117, 134) and concentrically to the guide path of the latter.

9. Apparatus according to one or more of claims 1 through 8, characterized in that said sheet-gripping mechanism (8, 28, 66, 78, 84, 136, 137) is mounted to a motor shaft (47, 140) of a motor (46).

10. Apparatus according to one or more of claims 1 through 9, characterized in that said sheet-gripping mechanism (8) comprises a suction bar (28) supported such that it can be tilted, that a spring (32) arranged in a first position inclined with respect to the sheet-film plane acts on said suction bar (28), and that said suction bar (28) can be moved by a pneumatically actuated cable line (29) into a second position parallel to the sheet-film plane.

11. Apparatus according to one or more of claims 1 through 10, characterized in that a movable sensing member (28f) lying on the sheet-film surface is mounted to said suction bar (28) and that an electrooptic sensor (28e) mounted to said suction bar (28) is arranged in the path of movement of the sensing member (28f).

12. Apparatus according to one or more of claims 1 through 11, characterized in that a second electrooptic sensor (28d) is arranged on said suction bar (28) and that said second electrooptic sensor (28d) is associated with a projection (4c) of a supply cassette (4), said projection (4c) indicating the height of the remaining stack (of cassettes).

13. Apparatus according to one or more of claims 1 through 12, characterized in that said suction bar (28) comprises an extruded member with longitudinal bore holes (28b, 28g, 28h) and that said longitudinal bore holes (28b, 28g, 28h) are connected with the suction elements (28a) or are used to mount component parts.

14. Apparatus according to one or more of claims 1 through 13, characterized in that the air-blast tubes (25, 26) facing the leading edge of the sheet film are arranged on said sheet-gripping device (8, 28).

15. Apparatus according to one or more of claims 1 through 14, characterized in that motor shaft (47) rotatably supports a wire-bracket assembly (34), and that said wire-bracket assembly (34) and the sheet-gripping mechanism (8, 28) are connected so that they can be moved relative with respect to each other by means of a clutch (34, 35, 36, 37, 38) in positive or nonpositive engagement.

16. Apparatus according to claim 15, characterized in that wire-bracket assembly (34) comprises a U-shaped arm (34g) reaching around a sheet film and that an electrooptic sensor (34h) is mounted to said arm (34g).

17. Apparatus according to one or more of claims 1 through 16, characterized in that a barrier for reflected light (44) is mounted to a guide part (7), that a mirror (45b) is mounted to the sheet-gripping mechanism (8), and that reflected-light sensor (44) and mirror (45b) are in alignment with a reflective foil (51) on the bottom of supply magazine (4).

18. Apparatus according to one or more of claims 1 through 17, characterized in that the sheet-film support members (52, 54) are mounted to the wire-bracket subassembly (34) and that the sheet-film support members (52, 54) are arranged below the inside radius of the curve defined by the guide channel (9a, 10a) of the sheet-film holder (9, 10).

19. Apparatus according to one or more of claims 1 through 18, characterized in that sheet-film support members (52, 54) comprise abutment surfaces (52a, 54b) associated with the external front wall (4e) of supply magazine (4).

20. Apparatus according to one or more of claims 1 through 19, characterized in that the latches (53, 55) are pivotally mounted to the sheet-film support members (52, 54) and that said latches (53, 55) have end surfaces (53b, 55a) associated with the internal end surface (4b) of the supply cassette (4).

21. Apparatus according to one or more of claims 1 through 4 and 6 through 20, characterized in that the sheet-film holder consists of two wire members (9, 10) having similar shape and being arranged parallel at a distance from each other and comprises circular parallel guide channels (9a, 10a), that the suction device (8, 28) and the wire-bracket assembly (34) are arranged between the two wire elements (9, 10), and that U-shaped arm (34g) with electrooptic sensor (34h) is arranged outside one of the two wire elements (9 or 10).

22. Apparatus according to one or more of claims 1 through 4, 6, 7 and 8, characterized in that a suction mechanism (101 and 115) is guided parallel to one straight guide channel (102 and 116), as well as parallel to an adjacent arcuate guiding channel (103 and 117).

23. Apparatus according to claim 22, characterized in that said suction mechanism (101 and 115) is arranged on a continuous belt (100 or 114) supported on shafts (104, 105 or 112, 113).

24. Apparatus according to claims 22 and 23, characterized in that one of the shafts (105 or 112) is arranged in the center of the arcuate guide path (103 or 117) and that belt (100 or 114) is guided parallel to the straight guide channel (102 or 116).

25. Apparatus according to one or more of claims 1 through 24, characterized in that the sheet-film transfer mechanism (6, 59, 139) can be moved in vertical direction and along the end sides of vertically stacked supply magazines (4, 61, 138) and one superimposed individual sheet-film cassette (5, 67, 127).

26. Apparatus according to one or more of claims 1 through 24, characterized in that the sheet-film transfer mechanism (74, 81; 121, 122) can be moved in horizontal direction and along the end sides of upright, horizontally stacked supply magazines (72, 96) and one other adjacent individual sheet-film cassette (88, 119).

**Revendications**

1. Dispositif pour l'insertion automatique d'un film en feuille dans une cassette de film en feuille, comprenant plusieurs magasins de réserve de films en feuilles et un dispositif de transfert de film en feuille pouvant être déplacé entre un magasin de réserve de films en feuilles sélectionné en un poste de chargement de cassette, caractérisé en ce que le dispositif de transfert de film en feuille (6, 59 , 74, 81, 121, 122, 139) comporte un support de film en feuille (9, 10, 64, 76, 82, 102, 103, 116, 117, 134) comprenant une voie de guidage (9a, 10a, 64, 76, 82, 102, 103, 116, 117, 134) pour recevoir un film en feuille, en ce que le support de film en feuille (9, 10, 64, 76, 82, 102, 103, 116, 117, 134) comporte un dispositif de préhension de feuille (8, 28, 66, 78, 84, 101, 115, 136, 137) susceptible de se déplacer sur la voie de guidage (9a, 10a, 64, 76, 82, 102, 103, 116, 117, 134), et en ce que le support de film en feuille (9, 10, 64, 76, 82, 102, 103, 116, 117, 134) et le dispositif de préhension de feuille (8, 28, 66, 78, 84, 101, 115, 136, 137) sont réalisés sous la forme d'une unité (6, 59, 74, 81, 121, 122, 139) permettant leur déplacement en commun.

2. Dispositif selon la revendication 1, caractérisé en ce que la voie de guidage (9a, 10a, 64, 76, 82, 102, 103, 117, 134) du support de film en feuille (9, 10. 64. 76. 82, 102, 103, 117, 134) présente une forme cintrée en arc, de préférence en arc de cercle.

3. Dispositif selon la revendication 1, caractérisé en ce que la voie de guidage du support de film en feuille (102, 103 et 116, 117) comprend des parties rectilignes (102, 116) et des parties en forme d'arc de cercle (103, 117).

4. Dispositif selon l'une ou plusieurs des revendications 1 à 3, caractérisé en ce que la voie de guidage du support de film en feuille (9, 10, 64, 76, 82, 102, 103, 116, 117) se présente sous la forme d'un canal de guidage.

5. Dispositif selon l'une ou plusieurs des revendications 1 à 3, caractérisé en ce que la voie de guidage du support de film en feuille (134) se présente sous la forme d'une coque.

6. Dispositif selon l'une ou plusieurs des revendications 1 à 5, caractérisé en ce qu'une extrémité de la voie de guidage cintrée en forme d'arc (9a, 10a, 64, 76, 82, 103, 117, 134) débouche dans le plan du film en feuille.

7. Dispositif selon l'une ou plusieurs des revendications 1 à 6, caractérisé en ce que le support de film en feuille (9, 10) est constitué de pièces en fil cintrées en forme d'arc.

8. Dispositif selon l'une ou plusieurs des revendications 1 à 7, caractérisé en ce que le support de film en feuille (9, 10, 64, 76, 82, 102, 103, 116, 117, 134) est fixé sur une pièce de guidage (7, 65, 77, 83, 99, 108, 109, 133) guidé de manière rectiligne, et en ce que le dispositif de préhension de feuille (8, 28, 66, 78, 84, 101, 115, 136, 137) est monté pivotant autour du centre du support de film en feuille cintré en forme d'arc (9, 10, 64, 76, 82, 103, 117, 134) et concentriquement à la voie de guidage de celui-ci.

9. Dispositif selon l'une ou plusieurs des revendications 1 à 8, caractérisé en ce que le dispositif de préhension de feuille (8, 28, 66, 78, 84, 136, 137) est fixé sur un axe-moteur (47, 140) d'un moteur (46).

10. Dispositif selon l'une ou plusieurs des revendications 1 à 9, caractérisé en ce que le dispositif de préhension de feuille (8) comporte une barre d'aspiration (28) montée de manière basculante, en ce que la barre d'aspiration (28) est sollicitée, par un ressort (32), vers une première position inclinée par rapport au plan des films en feuilles, et en ce que la barre d'aspiration (28) peut être déplacée, par l'intermédiaire d'une transmission à câble (29) actionnée pneumatiquement, vers une seconde position parallèle au plan des films en feuilles.

11. Dispositif selon l'une ou plusieurs des revendications 1 à 10, caractérisé en ce que sur la barre d'aspiration (28) est disposé un organe mobile formant palpeur (28f) reposant sur la surface du film en feuille, et en ce que sur la trajectoire de déplacement de l'organe formant palpeur (28f), est disposée une barrière photoélectrique à fourche (28e) fixée sur la barre d'aspiration (28).

12. Dispositif selon l'une ou plusieurs des revendications 1 à 11, caractérisé en ce que sur la barre d'aspiration (28) est disposée une seconde barrière photoélectrique à fourche (28d), et en ce que la seconde barrière photoélectrique à fourche (28d) est associée à une protubérance (4c) d'une cassette de réserve (4), cette protubérance indiquant la hauteur de la pile restante dans la cassette.

13. Dispositif selon l'une ou plusieurs des revendications 1 à 12, caractérisé en ce que la barre d'aspiration (28) comprend une pièce d'extrusion pourvue d'alésages longitudinaux (28b, 28g, 28h), et en ce que les alésages longitudinaux (28b et respectivement 28g, 28h) sont reliés à des éléments d'aspiration (28a) ou sont destinés à la fixation de pièces.

14. Dispositif selon l'une ou plusieurs des revendications 1 à 13, caractérisé en ce que sur le dispositif de préhension de feuille (8, 28) sont disposés des tubes de soufflage (25, 26) dirigés face au bord avant du film en feuille.

15. Dispositif selon l'une ou plusieurs des revendications 1 à 14, caractérisé en ce que sur l'axe-moteur (47) est monté tournant un sous-ensemble à étrier en fil (34), et en ce que le sous-ensemble à étrier en fil (34) et le dispositif de préhension de feuille (8, 28) sont reliés entre-eux de manière mobile l'un par rapport à l'autre, au moyen d'un accouplement (34, 35, 36, 37, 38) agissant par adhérence et/ou par complémentarité de forme.

16. Dispositif selon la revendication 15, caractérisé en ce que le sous-ensemble à étrier en fil (34) comporte un bras (34g) en forme de "U" entourant un film en feuille, et en ce que sur le bras (34g) est disposée une barrière photoélectrique à fourche (34h).

17. Dispositif selon l'une ou plusieurs des revendications 1 à 16, caractérisé en ce que sur la pièce de guidage (7) est disposée une barrière photoélectrique à réflexion (44), en ce que sur le dispositif de préhension de feuille (8) est disposé un miroir (45b), et en ce que la barrière photoélectrique à réflexion (44) et le miroir (45b) sont orientés de manière appropriée par rapport à une feuille réfléchissante (51) se trouvant sur le fond du magasin de réserve (4).

18. Dispositif selon l'une ou plusieurs des revendications 1 à 17, caractérisé en ce que sur le sous-ensemble à étrier en fil (34) sont disposées des pièces d'appui de film en feuille (52, 54), et en ce que les pièces d'appui de film en feuille (52, 54) sont disposées sous le rayon inférieur du canal de guidage (9a, 10a) du support de film en feuille (9, 10).

19. Dispositif selon l'une ou plusieurs des revendications 1 à 18, caractérisé en ce que les pièces d'appui de film en feuille (52, 54) présentent des surfaces de butée (52a, 54b) associées à la paroi frontale extérieure (4e) des magasins de réserve (4).

20. Dispositif selon l'une ou plusieurs des revendications 1 à 19, caractérisé en ce que sur les pièces d'appui de film en feuille (52, 54) sont disposés des cliquets (53, 55) montés pivotants, et en ce que les cliquets (53, 55) comportent des surfaces frontales (53b, 55a) associées à la paroi frontale intérieure (4b) de la cassette de réserve (4).

21. Dispositif selon l'une ou plusieurs des revendications 1 à 4 et 6 à 20, caractérisé en ce que le support de film en feuille est constitué par des pièces en fil (9, 10) de même forme, disposées à distance et parallèlement entre-elles, et comportant des canaux de guidage (9a, 10a) parallèles et en forme d'arc de cercle, en ce que le dispositif d'aspiration (8, 28) et le sous-ensemble à étrier en fil (34) sont disposés entre les deux pièces en fil (9, 10), et en ce que le bras en forme de "U" (34g) comportant la barrière photoélectrique à fourche (34h), est disposé en-dehors de l'une des deux pièces en fil (9 ou 10).

22. Dispositif selon l'une ou plusieurs des revendications 1 à 4, 6, 7 et 8, caractérisé en ce qu'un dispositif d'aspiration (101 et 115) est guidé, aussi bien parallèlement à un canal de guidage rectiligne (102 et 116), que parallèlement à un canal de guidage cintré en forme d'arc (103 et 117) qui se raccorde au précédent.

23. Dispositif selon la revendication 22, caractérisé en ce que le dispositif d'aspiration (101 et 115) est disposé sur une courroie sans fin (100 et 114) montée sur des arbres (104, 105 et 112, 113).

24. Dispositif selon les revendications 22 et 23, caractérisé en ce que l'un des arbres (105 et 112) est disposé au centre de la voie de guidage cintrée en forme d'arc (103 et 117), et en ce que la courroie (100 et 114) est guidée parallèlement au canal de guidage rectiligne (102 et 116).

25. Dispositif selon l'une ou plusieurs des revendications 1 à 24, caractérisé en ce que le dispositif de transfert de film en feuille (6, 59, 139) peut être déplacé verticalement, le long des faces frontales de magasins de réserve (4, 61, 138) superposés horizontalement et d'une cassette individuelle de film en feuille (5, 67, 127), disposée au-dessus.

26. Dispositif selon l'une ou plusieurs des revendications 1 à 24, caractérisé en ce que le dispositif de transfert de film en feuille (74, 81; 121, 122) peut être déplacé horizontalement, le long des faces frontales de magasins de réserve (72, 96) disposés verticalement côte à côte, et d'une cassette individuelle de film en feuille (88, 119), disposée à côté.

Fig.1

10 29   30 56   55 45b   54a   25 55a   8a   4a

28a

28

8d

27

4d

4

8

54b

54

44

4e

31a

31b

8c

47

34e 4f/g 51   4b

50

40a

31

A

8a

40

Fig. 2

Fig. 3

Fig. 4

EP 0 348 407 B1

Fig. 5

Fig. 6

EP 0 348 407 B1

Fig.7

Fig. 8

Fig. 9

EP 0 348 407 B1

Fig. 10

71  73  75  80  76  74  77  78  72a  79  82  84  81  83  86  85  90

89

88a

EP 0 348 407 B1

28

72      Fig. 11      88  87      91 92      93

Fig.12

Fig. 13